(19) Europäisches Patentamt
European Patent Office
Office européen des brevets

(11) **EP 4 488 664 A1**

(12) **EUROPÄISCHE PATENTANMELDUNG**

(43) Veröffentlichungstag:
08.01.2025 Patentblatt 2025/02

(21) Anmeldenummer: 24182172.7

(22) Anmeldetag: 14.06.2024

(51) Internationale Patentklassifikation (IPC):
**G01N 21/64** (2006.01) **G02B 21/00** (2006.01)
**G02B 21/36** (2006.01)

(52) Gemeinsame Patentklassifikation (CPC):
**G01N 21/6458; G02B 21/0048; G02B 21/0076;
G02B 21/0084;** G02B 21/365

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität: **14.06.2023 DE 102023115483**

(71) Anmelder: **Abberior Instruments GmbH
37077 Göttingen (DE)**

(72) Erfinder:
• **REUSS, Matthias
37083 Göttingen (DE)**
• **WILLEMER, Winfried
37120 Bovenden (DE)**

(54) **VERFAHREN, LICHTMIKROSKOP UND COMPUTERPROGRAMM ZUR LOKALISIERUNG ODER ZUM VERFOLGEN EINES EMITTERS**

(57) Die Erfindung betrifft ein Verfahren zur Lokalisierung oder zum Verfolgen eines Emitters (E) in einer Probe (2), wobei die Probe (2) mit einer Intensitätsverteilung von Beleuchtungslicht mit einem lokalen Intensitätsminimum beleuchtet wird, wobei sich das Beleuchtungslicht auf Lichtemissionen (L) des Emitters (E) auswirkt, und wobei die Intensitätsverteilung auf einer Bahn (20) um eine vermutete Position des Emitters (E) verlagert wird, wobei Lichtemissionen (L) des Emitters (E) in einem Messzeitintervall (T) zeitlich aufgelöst erfasst werden, um ein Emissionssignal (S) zu erhalten, und wobei eine Position des Emitters (E) in der Probe (2) auf Basis einer durch die Verlagerung der Intensitätsverteilung auf der Bahn (20) hervorgerufenen zeitlichen Modulation des Emissionssignals (S) geschätzt wird, sowie ein Lichtmikroskop (1) und ein Computerprogramm zur Durchführung des Verfahrens.

Fig. 5

## Beschreibung

### Technisches Gebiet der Erfindung

Die Erfindung betrifft ein Verfahren zur Lokalisierung oder zum Verfolgen eines Emitters in einer Probe sowie ein Lichtmikroskop und ein Computerprogramm zur Durchführung des Verfahrens.

### Stand der Technik

Ein Verfahren zum Bestimmen der Position eines Emitters in einer Probe und zum Verfolgen eines Emitters in einer Probe unter Nutzung eines fokussierten Beleuchtungslichts, dessen gaußförmiger Fokus entlang einer Bahn um einen Emitter herum verlagert wird, ist im Stand der Technik bekannt und wird mittlerweile als "orbital method" oder, je nach Anwendung, als "orbital tracking" oder "orbital scanning" bezeichnet.

Ein solches Verfahren wird in der Veröffentlichung "Tracking of fluorescent molecules diffusing within membranes" (Jörg Enderlein, Appl. Phys. B 71, 773-777 (2000); DOI: 10.1007/ s003400000409) vorgeschlagen und in der Veröffentlichung "Positional and Temporal Accuracy of Single Molecule Tracking" (Jörg Enderlein, Single Mol., 1: 225-230. https://doi.org/10.1002/1438-5171) weiter erläutert. Bei dem Verfahren wird ein Laserstrahl in die Bewegungsebene des zu beobachtenden Moleküls fokussiert. Der Laserfokus wird entlang einer Kreisbahn mit einem festen Radius bewegt. Dasselbe gilt ebenso für den Fokuspunkt der somit konfokalen Detektion. Nach jedem Umlauf wird der Mittelpunkt des Kreises entsprechend den entlang der Kreisbahn beobachteten Photonendetektionsintensitäten an eine neue Position angepasst, wobei die Richtung der Anpassung optimal und die radiale Verschiebung einfach genähert bestimmt ist. In der letztgenannten Publikation wird auf die erreichbare Genauigkeit einer Positionsbestimmung eines ruhenden Fluorophors, also auf eine Lokalisation, eingegangen. Das Verfahren sei realisierbar unter Verwendung kommerziell verfügbarer Piezoscanner und Piezotische.

In der Publikation "Scanning FCS, a novel method for three-dimensional particle tracking" (Levi V. et al., Biochem Soc Trans. 2003 Oct; 31(Pt 5):997-1000. doi: 10.1042/bst0310997. PMID: 14505467) wird ein Verfahren nach dem Prinzip des *orbital tracking* beschrieben. Es wird ein Gauß'scher Laserfokus zur Zweiphotonen-Anregung von Fluoreszenz genutzt. Dieser wird im Wechsel auf zwei Kreisbahnen jeweils um ein Zentrum auf einer optischen Achse geführt, wobei sich ein Zentrum oberhalb und das andere unterhalb des zu verfolgenden Partikels befindet. Die Verlagerung des Fokus auf der Kreisbahn erfolgt dabei mittels eines Galvo-Scanners. Aus der Differenz der über jeweils mehrere Umläufe gemittelten Fluoreszenzsignale wird auf die axiale Position des Partikels geschlossen. Die laterale Position des Partikels wird bestimmt, indem jeweils aus mehreren Umläufen, abhängig vom Signallevel, um ein Zentrum ein Signalprofil bestimmt wird, welches mittels einer schnellen Fouriertransformation (FFT) analysiert wird. Die daraus bestimmte Phase der Grundfrequenz, des "AC term", entspreche direkt der Winkelkoordinate der Position des beobachten Teilchens, während aus dem Verhältnis des Gleichanteils, als "DC" bezeichnet, zum "AC term", das heißt aus der Modulation "AC/DC", der radiale Abstand der Position des Partikels zur Umlaufachse bestimmt werden könne.

Dasselbe Messprinzip wird in der Veröffentlichung "3-D Particle Tracking in a Two-Photon Microscope: Application to the Study of Molecular Dynamics in Cells" (Levi V. et al., Biophys. J 88 (2005) 2919-2928) angewendet.

In der Veröffentlichung "Distance Measurement by Circular Scanning of the Excitation Beam in the Two-Photon Microscope" (Kis-Petikova K. et al., Microscopy Research and Technique 63 (2004), 34-49) wird die Methode auf eine Abstandsmessung zwischen zwei Fluorophoren mit unterschiedlichem Emissionsspektrum erweitert.

In der Dissertation "Trapping and Manipulating Single Molecules in Solution" (Adam E. Cohen, Dissertation, Stanford University, defended Aug. 2006) wird beschrieben, wie ein fluoreszierendes Partikel mittels Nutzung eines wie beim Orbital Scanning umlaufenden Fokus verfolgt wird, wobei die Ablenkung des Fokus mittels akusto-optischer Deflektoren erfolgt. Hierfür wird in einer Ausführungsform, bei der die Detektionsrate der Fluoreszenzphotonen kleiner als die Umlauffrequenz des Fokus ist, im Wesentlichen immer dann, wenn während des Umlaufs ein Photon detektiert wird, eine Piezo-Verschiebeeinheit derart bewegt, dass der Fokus in der Fokalebene radial nach außen bewegt wird, wodurch die Bahn des Umlaufs relativ zu dem Partikel derart verschoben wird, dass der Partikel im Zentrum der Bahn gehalten wird. Bei Detektionsraten größer der Umlauffrequenz erfolgt eine Bewegung der Verschiebeeinheit jeweils nach einem vollen Umlauf entsprechend der über die während eines Umlaufs detektierten Photonen.

In der Publikation "Real-time nanomicroscopy via three-dimensional single-particle tracking" (Katayama Y. et al., Chemphyschem. 2009 Oct 5;10(14):2458-64. doi:10.1002/cphc.200900436. PMID: 19760694; PMCID: PMC2857558.) wird eine orbital-tracking-Methode beschrieben, bei der ein Anregungsfokus innerhalb einer Ebene auf einer Kreisbahn bewegt wird, während die Emission in zwei Ebenen, die bezüglich der konfokalen Ebene gegensinnig axial etwas versetzt sind, detektiert wird. Zudem wird beschrieben, dass das orbital tracking durchgeführt wird, während gleichzeitig unter Verwendung einer anderen Anregungswellenlänge ein Weitfeldbild der Probe aufgenommen wird. Das orbital tracking wird dabei mittels eines Piezo-Scanners durchgeführt.

In der Publikation "Nanoresolution real-time 3D orbital tracking for studying mitochondrial trafficking in vertebrate axons in vivo" (Wehnekamp, F. et al., (2019), eLife 8:e46059., https://doi.org/10.7554/eLife.46059 ) wird ebenfalls eine Kombination von orbital tracking und Weitfeldbildgebung beschrieben. Dabei erfolgt das orbital tracking unter Verwendung eines fotoaktivierbaren Fluoreszenzfarbstoffs, was ein Verfolgen einzelner Organellen in einem dicht gefärbten Hintergrund ermöglicht.

Die Publikation "Tracking-FCS: Fluorescence correlation spectroscopy of individual particles" (Berglund AJ und Mabuchi H, Optics Express 13, 20 (2005), 8069-8082) beschreibt ein Fluoreszenzkorrelationsspektroskopie-Verfahren einzelner Farbstoffmoleküle, bei dem ein gaußförmiger Anregungsstrahl auf einer kreisförmigen Bahn verlagert wird, die Molekülposition aus einer Demodulation der Fluoreszenz bestimmt wird, und ein Stellsignal für einen piezoelektrischen Probenscanner bereitgestellt wird, um die Bewegung des Moleküls zu verfolgen.

Die *orbital method* wird zumeist in Verbindung mit der Nutzung einer Strahl-Scanvorrichtung auf Basis insbesondere von Galvo-Scannern beschrieben. Bei Verwendung von Galvo-Scannern wird eine Kreisbahn abgefahren, indem eine x- und eine y-Ablenkeinheit mit derselben Frequenz angesteuert werden, wobei der Verlauf der Ablenkung über der Zeit einer Sinusfunktion folgt. Der Radius der Bahn skaliert mit der Amplitude der Ablenkung, das Zentrum der Kreisbahn entspricht dem Mittelwert der Ablenkung.

In der internationalen Patentoffenlegungsschrift WO 2004/079405 A2 werden Scanning-Verfahren zum Beispiel für die Konfokalmikroskopie vorgeschlagen, die eine schnellere Bildaufnahme unter Verwendung mechanischer Strahlablenkeinrichtungen ermöglichen sollen. Hohe Beschleunigungen der mechanischen Strahlablenkeinrichtungen führen zu Belastungen. Um diese Belastungen bei der Verwendung der Strahlablenkeinrichtung zu minimieren, sollen die während des Scannens auftretenden Beschleunigungen minimiert werden. Hierfür sei die Ansteuerung der Ablenkeinrichtung mit sinusoidalen Wellenformen optimal. Es werden verschiedene Ansteuersignale und korrespondierende Scanbahnen eines Lichtstrahls vorgeschlagen. Die Ansteuersignale für eine x-Richtung und eine y-Richtung sind jeweils Sinus- beziehungsweise Kosinussignale, die über die Zeit langsam variiert werden und allenfalls zu einem einzigen bestimmten Zeitpunkt während das Abfahrens einer gesamten Bahn schnell variiert werden. Die resultierenden Scanbahnen sind verschiedene Spiralbahnen oder Kombinationen aus Spiralbahnen.

In den japanischen Patentoffenlegungsschriften JP 2000-098238 A und JP 2005-241321 A werden ebenfalls Scanning-Verfahren beschrieben, bei denen Bildfelder entlang von Spiralbahnen abgetastet werden. Die Spiralbahnen werden erzeugt, indem einzelne Scanner mit Signalen angesteuert werden, die genau oder im Wesentlichen einem Produkt einer zeitabhängigen Sinus- oder Kosinusfunktion zu einer ersten Frequenz und einer weiteren Sinus- oder Kosinusfunktion zu einer zweiten Frequenz entsprechen. In der Schrift JP 2005-241321 A wird ein solches Ansteuersignal derart modifiziert, dass die Tangentialgeschwindigkeit der Abtastbewegung während der Abtastung konstant bleibt. Die Abtastverfahren gemäß der beiden Offenlegungsschriften wurden von Olympus unter dem Namen Tornado Scanning als Scan-Verfahren ausschließlich zur Beleuchtung zum Beispiel für FLIP, FRAP, *photo activation,* oder *photo conversion, uncaging,* etc. vermarktet. In der Offenlegungsschrift JP 2000-098238 A wird erwähnt, dass die einzelnen Ablenkeinheiten des Scanners auch jeweils derart mit einem reinen Sinus- oder Kosinussignal angesteuert werden könnten, sodass die Abtastbahn einer Lissajousfigur entspricht.

In der deutschen Patentschrift DE 10 2016 117 096 B4 werden Verfahren zur Bildgebung insbesondere mittels Anwendung der STED-Mikroskopie angegeben, bei denen eine besonders hohe Auflösung dadurch erreicht wird, dass nur ein Nahbereich des abzubildenden Objekts mit einem Intensitätsprofil zum Beispiel des STED-Lichts mit einem zentralen Minimum abgetastet wird, sodass das abzubildende Objekt während der Abtastung zu keinem Zeitpunkt mit den hohen Intensitäten der das Minimum begrenzenden Maxima beaufschlagt wird und daher während der Abtastung nicht gebleicht wird. Die Abtastung mit der Intensitätsverteilung kann auf einem rechteckigen Raster erfolgen oder die Abtastung erfolgt ausgehend vom Zentrum des abzubildenden Objekts auf einer Spiralbahn.

Unter dem Begriff "MINFLUX-Mikroskopie" bzw. "MINFLUX-Verfahren" werden Lokalisierungs- und Trackingverfahren für vereinzelte Emitter zusammengefasst, bei denen am Fokus in der Probe Lichtverteilungen von Beleuchtungslicht, das Lichtemissionen des Emitters anregt, erzeugt werden, wobei die Lichtverteilungen ein lokales Minimum aufweisen, und bei denen die Position eines vereinzelten Emitters durch Erfassen von Lichtemissionen des Emitters für verschiedene Lagen der Minima der betreffenden Lichtverteilungen oder für verschiedene solche Lichtverteilungen in einem Nahbereich des Emitters bestimmt wird, insbesondere wobei ausgenutzt werden kann, dass von dem Emitter umso weniger Licht emittiert wird, je geringer der Abstand zwischen dem Emitter und dem Minimum der Lichtverteilung ist. Im Minimum selbst soll der Emitter so wenig wie möglich zur Emission angeregt werden, sodass das Ansteigen der Emission mit steigendem Abstand zum Minimum der Lichtverteilung im Verhältnis zur Emission jeweils möglichst groß ist. Aufgrund des letztgenannten Sachverhalts sind MINFLUX-Verfahren, insbesondere im Vergleich zu auf der ortsaufgelösten Erfassung der Emission basierenden Lokalisierungsverfahren wie aus der PALM- oder STORM-Mikroskopie bekannt, besonders photoneneffizient, das bedeutet, bei gleicher Anzahl detektierter Photonen wird mit MINFLUX-Verfahren eine besonders hohe Genauigkeit der Lokalisation erreicht. Dies ermöglicht, dass die mit einer angestrebten Genauigkeit zu lokalisierenden oder zu verfolgenden Emitter im Vergleich zu anderen Lokalisierungsmethoden mit relativ wenig Licht beaufschlagt werden können und daher weniger gebleicht werden.

Ein Verfahren der oben beschriebenen Art ist in der Patentanmeldung DE 10 2011 055 367 A1 für das Einzelmolekül-Tracking beschrieben. Gemäß der dort offenbarten Methode wird die Position eines einzelnen Fluorophors über die Zeit verfolgt, indem eine Anregungslichtverteilung mit lokalem Minimum dem Fluorophor so nachgeführt wird, dass die Fluoreszenzemissionsrate minimal ist.

Das Patent DE 10 2013 114 860 B3 beschreibt insbesondere ein Lokalisationsverfahren, bei dem die Probe an Rasterpunkten mit dem lokalen Minimum einer Anregungslichtverteilung abgetastet wird, um einzelne Fluorophore zu lokalisieren.

Der Begriff "MINFLUX" wird eingeführt in der Publikation "Nanometer resolution imaging and tracking of fluorescent molecules with minimal photon fluxes" (Balzarotti F. et al., Science. 2017 Feb 10;355(6325):606-612 sowie vorab arXiv:1611.03401 [physics.optics] (2016)). Bei der dort beschriebenen Methode wird das MINFLUX-Prinzip konkret umgesetzt, indem kleine Strukturen, die stochastisch blinkende Fluorophore aufweisen, in einem Weitfeldbild identifiziert und möglichst genau in das Zentrum des Weitfeldbildes gerückt werden und indem anschließend der Zentrumsbereich mit einer donutförmigen Anregungslichtverteilung in der Mitte und an weiteren Punkten, die ein symmetrisches Muster von Beleuchtungspositionen um die Mitte bilden, mittels elektro-optischer Scanner abgetastet wird; aus den für die einzelnen Beleuchtungspositionen registrierten Photonenzahlen werden dann mit einem *maximum-likelihood-Schätzer* die Positionen der einzeln blinkenden Fluorophore der Strukturen auf wenige Nanometer genau bestimmt. Bei gleicher Anzahl detektierter Photonen ist dabei die Genauigkeit umso höher, je kleiner der von Abtastpositionen umgrenzte Bereich, in dem sich jeweils das zu lokalisierende Fluorophor befindet, ist. Daher sei es vorteilhaft, MINFLUX iterativ an einzelnen Fluorophoren auszuführen, wobei von Schritt zu Schritt der umgrenzte Bereich verkleinert wird.

In der internationalen Patentoffenlegungsschrift WO 2022/029283 A1 wird ein weiteres MINFLUX-Verfahren beschrieben. Bei diesem wird ein Beleuchtungsmuster mit sechs oder mehr Beleuchtungspositionen, die rotationssymmetrisch auf einem Kreis um eine vorher abgeschätzte Position eines Emitters liegen, verwendet. Die Beleuchtungspositionen können dabei schrittweise oder in einer kontinuierlichen Bewegung adressiert werden, wobei im letztgenannten Fall ein Abschnitt der Kreisbahn zusammengefasst als ein diskreter Abtastpunkt behandelt werden kann. In einer Ausführungsform dieses Verfahrens wird eine Hintergrundfluoreszenz bestimmt, die bei der Bestimmung der Position des Fluorophors aus den an den Positionen des Beleuchtungsmusters erhaltenen Messwerten berücksichtigt wird.

In dem europäischen Patent EP 3 372 990 B1 wird neben weiteren MINFLUX-Verfahren ein den MINFLUX-Verfahren in einem Aspekt ähnliches Verfahren beschrieben. Wie bei einem MINFLUX-Verfahren wird ein vereinzeltes Molekül fokussiert mit einer Intensitätsverteilung beaufschlagt, die ein zentrales Minimum, bevorzugt eine Nullstelle, und dieses umgebende Anstiegsbereiche aufweist; ebenfalls wie bei MINFLUX wird dieses Minimum an eine Mehrzahl von Abtastpunkten um den vermuteten Ort des vereinzelten Moleküls platziert und es wird für jeden Abtastpunkt eine Fluoreszenzemission detektiert; aus den so erhaltenen Intensitätswerten oder Photonenzahlen wird die tatsächliche Position hochgenau abgeschätzt. Im Unterschied zu MINFLUX ist die Intensitätsverteilung eine Verteilung von Fluoreszenzverhinderungslicht, insbesondere von STED-Licht. Diese wird gemeinsam mit Anregungslicht angewendet, wobei die Intensitätsverteilung des Anregungslichts kein zentrales lokales Minimum aufweist. Während bei MINFLUX die Fluoreszenzemission dann höher ist, wenn das vereinzelte Moleküle weiter vom zentralen Minimum der Intensitätsverteilung entfernt ist, ist es bei diesem Verfahren umgekehrt.

In der Publikation "A common framework for single-molecule localization using sequential structured illumination" (Luciano A. Masullo et al.; Biophysical Reports, Volume 2, Issue 1, 2022, 100036; https://doi.org/10.1016/j. bpr.2021.100036.) wird dargestellt, dass verschiedene Verfahren zur Einzelmoleküllokalisierung als zu einem gemeinsamen Konzept gehörig aufgefasst werden können. In der Publikation wird unter anderem das in der oberhalb genannten Offenlegungsschrift WO 2022/029283 A1 beschriebene Verfahren unter Verwendung einer Anregungslichtverteilung mit einem zentralen Minimum mit Beleuchtungspositionen, die rotationssymmetrisch auf einem Kreis um eine vorher abgeschätzte Position liegen, als neues Verfahren beschrieben und als "Orbital Tracking with a MINimum" (OTMIN) bezeichnet. Weiter wird ein Verfahren zur Lokalisation aus einem auf einen kleinen Bereich um das zu lokalisierende Fluorophor beschränkten Rasterscan unter Verwendung eines Intensitätsminimums zur Abtastung, wie es im Wesentlichen bereits im Patent DE 10 2013 114 860 B3 beschrieben ist, vorgestellt und als "RASTer scanning with a MINimum" (RASTMIN) bezeichnet. Diese beiden Verfahren werden dann gemeinsam mit unter anderem dem (klassischen) *orbital tracking,* der Lokalisation aus einem Konfokalscan, der eingeschränkt auf einen kleinen Bereich um das zu lokalisierende Fluorophor ist, und MINFLUX gemäß der in "Nanometer resolution imaging and tracking of fluorescent molecules with minimal photon fluxes" (Balzarotii, s.o.) beschriebenen Version mit vier Abtastpunkten, von denen einer einer zentralen Position entspricht, unter dem Begriff "single-molecule localization by sequential structured illumination" (SML-SSI) subsumiert. Es werden auf Basis von Simulationen die erzielbaren Genauigkeiten der Lokalisation untersucht. Mit Bezug auf OTMIN wird festgestellt, dass Partikel in der Nähe des Zentrums sehr genau lokalisiert werden könnten, während Partikel in der Nähe des Kreises mit den Abtastpositionen deutlich ungenauer bestimmt werden könnten. In diesem Zusammenhang wird erwähnt, dass die hohe Unsicherheit experimentell vermieden werden könnte, indem Informationen in die Messung eingespeist werden, um ein Sichtfeld zu verwenden, das auf den wohlbehaltenen, inneren Bereich beschränkt ist, z. B. durch periodisches Nachführen des Musters in Echtzeit.

MINFLUX-Verfahren nach dem Stand der Technik zeichnen sich, wie bereits erläutert, durch eine besonders hohe Lokalisationsgenauigkeit bei hoher Photoneneffizienz und hoher Lokalisationsgeschwindigkeit aus.

Ein Nachteil bestehender MINFLUX-Verfahren besteht jedoch darin, dass relativ komplexe und teure Apparaturen erforderlich sind, insbesondere Scanvorrichtungen mit elektrooptischen Deflektoren.

## Aufgabe der Erfindung

Es ist nun eine Aufgabe der Erfindung, eine hohe Lokalisationsgenauigkeit mit einfacheren und kostengünstigeren technischen Mitteln ohne große Nachteile hinsichtlich der Messzeit zu erreichen.

## Lösung

Die Aufgabe wird durch den Gegenstand der unabhängigen Ansprüche gelöst. Weiterbildungen des Verfahrens sind in den Unteransprüchen angegeben und werden im Folgenden beschrieben.

## Beschreibung der Erfindung

Ein erster Aspekt der Erfindung betrifft ein Verfahren zur Lokalisierung oder zum Verfolgen eines Emitters in einer Probe, wobei die Probe mit einer Intensitätsverteilung von Beleuchtungslicht mit einem lokalen Intensitätsminimum beleuchtet wird, wobei sich das Beleuchtungslicht auf Lichtemissionen des Emitters auswirkt, und wobei die Intensitätsverteilung auf einer Bahn um eine vermutete Position des Emitters verlagert wird, wobei Lichtemissionen, insbesondere einzelne Lichtemissionen, des Emitters in einem Messzeitintervall zeitlich aufgelöst erfasst werden, um ein Emissionssignal zu erhalten, und wobei eine Position des Emitters in der Probe auf Basis einer durch die Verlagerung der Intensitätsverteilung auf der Bahn hervorgerufenen zeitlichen Modulation des Emissionssignals geschätzt wird.

Unter Emittern werden in dieser Anmeldung Objekte verstanden, die, wenn sie mit Anregungslicht beleuchtet werden, mit Blick auf die erfindungsgemäßen Messungen als Punktlichtquellen betrachtet werden können. Das von dem Objekt, das als Punktlichtquelle wirkt, ausgehende Licht kann beispielsweise Streulicht sein, das aus einer elastischen Streuung wie beispielsweise einer Rayleigh-Streuung oder einer unelastischen Streuung wie beispielsweise einer Raman-Streuung resultiert oder es kann Lumineszenzlicht, insbesondere Fluoreszenzlicht, sein.

Der Begriff Lokalisierung beschreibt in dieser Anmeldung ein Verfahren, bei dem eine Position eines einzelnen Emitters in einer Probe ermittelt wird. Im Gegensatz zu herkömmlichen lichtmikroskopischen Verfahren muss hierbei insbesondere keine optische Abbildung der Probe erfolgen. Vielmehr wird bei dem erfindungsgemäßen Verfahren mit einem Positionsschätzer die geschätzte Position eines Emitters auf Basis von dessen Lichtemissionen errechnet. Dieser Vorgang kann nacheinander für mehrere einzelne Emitter durchgeführt werden, die vereinzelt sind, d.h. einen Abstand oberhalb der mikroskopischen Beugungsgrenze aufweisen oder auf andere Weise messtechnisch trennbar sind (z.B. über unterschiedliche Emissionsspektren), und die bestimmten Positionen können in einer Lokalisationskarte dargestellt werden, die ein hochauflösendes lichtmikroskopisches Bild ergeben kann. Unter bestimmten Voraussetzungen können auch mehrere Emitter, die einen Abstand unterhalb der Beugungsgrenze haben, zeitlich simultan oder parallel lokalisiert werden.

Unter dem Verfolgen (auch als Tracking bezeichnet) eines Emitters wird das zeitlich aufeinanderfolgende mehrfache Lokalisieren eines Emitters verstanden, der sich in der Probe bewegt. Die entsprechenden Positionen können dann z.B. als Trajektorie dargestellt werden.

Die Intensitätsverteilung des Beleuchtungslichts weist ein lokales Intensitätsminimum, insbesondere eine Intensitätsnullstelle, auf. Insbesondere ist dieses Minimum zentral, d.h. am geometrischen Fokus angeordnet. Insbesondere kann die Intensitätsverteilung symmetrisch sein (insbesondere in lateraler Richtung also in einer senkrecht zur optischen Achse erstreckten Fokusebene sowie optional auch in axialer Richtung, also entlang der optischen Achse). Bei der Intensitätsverteilung kann es sich z.B. um einen sogenannten Donut oder einen sogenannten *bottle beam* handeln. Solche Verteilungen können insbesondere durch Phasenmodulation des Lichtstrahls mit einem Phasenmuster erzeugt werden (ein Vortex-Phasenmuster für einen Donut und ein ringförmiger Phasensprung für einen *bottle beam*), wobei am Fokus durch Interferenz die Intensitätsverteilung gebildet wird. Eine Phasenmodulation kann beispielsweise mit einem Phasenfilter oder einem ansteuerbaren räumlichen Lichtmodulator im Anregungsstrahlengang durchgeführt werden. Ein solcher Phasenfilter oder Lichtmodulator kann insbesondere in einer zur Rückapertur des Objektivs konjugierten Pupillenebene angeordnet sein. Bei bestimmten Phasenmustern, wie z.B. einem Vortex-Phasenmuster, kann es zusätzlich erforderlich oder vorteilhaft sein, den Lichtstrahl zirkular zu polarisieren.

Bei dem erfindungsgemäßen Verfahren kann es sich insbesondere um ein MINFLUX-Verfahren oder ein STED-MINFLUX-Verfahren handeln. Im Falle eines MINFLUX-Verfahrens ist das Beleuchtungslicht, das sich auf die Lichtemissionen des Emitters auswirkt, Anregungslicht. In diesem Fall können die Emitter insbesondere Luminophore, weiter insbesondere Fluorophore, oder mit einem oder mehreren Luminophoren markierte Moleküle oder Partikel sein, wobei das Anregungslicht die Emitter in einen angeregten Zustand überführt, aus dem der Emitter unter Aussendung eines Photons in einen Grundzustand zurückfällt. Alternativ kann es sich bei den Emittern auch um das Anregungslicht reflektierende oder streuende Partikel handeln. Bei sogenannten STED-MINFLUX-Verfahren wird am Fokus in der Probe eine Intensitätsverteilung von Anregungslicht mit einem lokalen Maximum mit einer Intensitätsverteilung von Verhinderungslicht (insbesondere STED-Licht) mit einem lokalen Minimum überlagert. In diesem Fall ist das sich auf die Lichtemissionen des Emitters auswirkende Beleuchtungslicht Verhinderungslicht.

Bei MINFLUX-Verfahren und STED-MINFLUX-Verfahren nach dem Stand der Technik wird das lokale Minimum der Intensitätsverteilung des Beleuchtungslichts nacheinander an mehrere Positionen in der Probe in einem Nahbereich einer vermuteten Position eines einzelnen Emitters verlagert, üblicherweise mit elektrooptischen Deflektoren. Für jede Position wird eine Vielzahl von Lichtemissionen erfasst. Aus den Emissionsraten (Photonen pro Zeiteinheit) an den verschiedenen Positionen kann dann mittels eines Positionsschätzers eine geschätzte Position des Emitters ermittelt werden. Dabei ist bei den MINFLUX-Verfahren die Photonenemissionsrate umso geringer, je näher das Minimum der Intensitätsverteilung an der tatsächlichen Position des Emitters liegt - befindet sich der Emitter genau am Minimum, so wird (abgesehen von Hintergrund) überhaupt kein Licht emittiert. Aus diesem Grund sind MINFLUX-Verfahren besonders photoneneffizient, d.h. ein Emitter lässt sich mit einer gegebenen Photonenzahl mit besonders hoher Präzision oder bei gegebener Genauigkeit mit besonders wenigen Photonen lokalisieren. Bei den STED-MINFLUX-Verfahren ist dagegen die Photonenemissionsrate umso höher, je geringer der Abstand zwischen dem Minimum der Intensitätsverteilung des Beleuchtungslichts (hier Verhinderungslicht, z.B. STED-Licht) und der tatsächlichen Position des Emitters ist.

Das erfindungsgemäße Verfahren hat gegenüber MINFLUX-Verfahren nach dem Stand der Technik unter anderem den Vorteil, dass eine hohe Lokalisationsgenauigkeit bei hoher Scangeschwindigkeit auch mit wesentlich einfacheren und günstigeren Scanvorrichtungen erreicht werden kann, insbesondere ohne elektrooptische Deflektoren (EOD). Dies wird dadurch erreicht, dass statt einer Ansteuerung definierter Abtastpositionen in der Probe die Intensitätsverteilung auf einer, insbesondere kontinuierlichen, Bahn um den Emitter herum bewegt wird. Eine solche Bahn, die etwa im Fall einer zweidimensionalen Bewegung in der Fokusebene z.B. kreisförmig oder elliptisch sein kann oder die Form einer Hypotrochoide oder Lissajous-Figur haben kann (s.u.), kann z.B. auch mit einem im Vergleich zu EODs wesentlich einfacheren und günstigeren Galvoscanner mit guter Genauigkeit und hoher Geschwindigkeit realisiert werden.

Die Bahn kann zweidimensional sein und z.B. in der Fokusebene (senkrecht zu einer optischen Achse des Objektivs) verlaufen oder die Bahn kann dreidimensional um die vermute Position des Emitters herum verlaufen.

Die Intensitätsverteilung des Beleuchtungslichts (das heißt deren Intensitätsminimum) wird erfindungsgemäß auf einer Bahn um eine vermutete Position des Emitters verlagert. Das bedeutet im Kontext der vorliegenden Spezifikation, dass die Bahn Orte umfasst, die bezüglich zumindest einer Ortskoordinate auf gegenüberliegenden Seiten der vermuteten Position des Emitters liegen. Dabei kann die Bahn die vermutete Position des Emitters umschließen (wie beispielsweise bei einem Kreis, dessen Zentrum die vermutete Position des Emitters ist), sie kann aber z.B. auch die vermutete Position des Emitters schneiden (z.B. bei einer rosettenförmigen Bahn oder einer Lissajous-Figur).

Bei MINFLUX-Verfahren nach dem Stand der Technik wird die Intensitätsverteilung des Beleuchtungslichts sprunghaft zwischen Abtastpositionen verlagert (z.B. mit EODs). Für jede Abtastposition werden in einem vordefinierten Messzeitraum Lichtemissionen erfasst. Aus dem Quotienten der gemessenen Photonenzahl und der Länge des Messzeitraums wird dann eine Photonenrate bestimmt, die der jeweiligen definierten Abtastposition zugeordnet wird.

Diese Art der Auswertung ist bei dem erfindungsgemäßen Verfahren nicht möglich - hier wird die Intensitätsverteilung kontinuierlich auf der Bahn bewegt, wobei die Lichtemissionen zufällig verteilt sind. Es gibt also keine definierten Abtastpositionen und keinen vordefinierten Messzeitraum.

Erfindungsgemäß wird dieses Problem gelöst, indem Lichtemissionen des Emitters in einem Messzeitintervall zeitlich aufgelöst erfasst werden, um ein Emissionssignal zu erhalten. Bei den Lichtemissionen kann es sich insbesondere um einzelne von einer Detektionsvorrichtung erfasste und registrierte Photonen handeln. Alternativ dazu kann eine Lichtemission auch ein Detektionsereignis sein, bei dem simultan oder kurz hintereinander mehrere Photonen erfasst werden.

Gemäß einer Ausführungsform kann das Emissionssignal z.B. als Vektor darstellbar sein, wobei die Elemente des Vektors jeweils einen Teilabschnitt des Messzeitintervalls repräsentieren (insbesondere gleich lange Teilabschnitte), und wobei ein jeweiliges Element einen Wert aufweist, der von der Anzahl der in dem Teilabschnitt registrierten Photonen entspricht. Die Anzahl von registrierten Photonen pro Teilabschnitt kann insbesondere eine Zahl zwischen 0 und 10, weiter insbesondere eine Zahl zwischen 0 und 5, noch weiter insbesondere eine Zahl zwischen 0 und 2, sein. Wenn die Teilabschnitte des Messzeitintervalls so gewählt sind, dass in jedem Teilabschnitt nur maximal ein Photon registriert wird, kann der Vektor auch lediglich binäre Werte (0 oder 1) aufweisen.

Überraschenderweise wurde im Zuge der vorliegenden Erfindung festgestellt, dass es möglich ist, durch Analyse der zeitlichen Modulation eines solchen Signals aus Lichtemissionen zuverlässig die Position des Emitters zu schätzen, beispielsweise durch Fourieranalyse oder Phasoranalyse (wie weiter unten detaillierter beschrieben).

Gemäß dem Stand der Technik zum Orbital Tracking mit einer gaußförmigen Lichtverteilung wurde eine Analyse der Signalmodulation bisher nur für hohe Photonenzählraten beschrieben, bei denen ein quasi-analoges Signal vorliegt. Für kleinere Zählraten lehrt der Stand der Technik im Gegensatz dazu, auf einzelne Photonen mit einer Auslenkung der Lichtverteilung zu reagieren. Eine derartige Reaktion auf einzelne Photonen ist jedoch für viele Anwendungen der MINFLUX-Mikroskopie aufgrund der hohen Störanfälligkeit für Hintergrund nicht geeignet.

Andererseits ist die MINFLUX-Technik jedoch durch besonders niedrige Photonenzählraten gekennzeichnet, insbesondere bei den Lokalisationsschritten, bei denen sich das Minimum der Intensitätsverteilung bereits relativ nah an der tatsächlichen Position des Emitters befindet.

Die Erkenntnis, dass die Position eines einzelnen Emitters mit hoher Genauigkeit durch Auswertung der zeitlichen Modulation eines aus zeitaufgelösten Emissionsereignissen bestehenden Emissionssignals geschätzt werden kann, ist deshalb für die MINFLUX-Mikroskopie besonders wertvoll.

Das Messzeitintervall kann z.B. einen Umlauf oder mehrere Umläufe der Intensitätsverteilung um die vermutete Position des Emitters umfassen.

Die Lichtemissionen können z.B. mit einem für Einzelphotonen sensitiven Detektor (z.B. einer *avalanche*-Photodiode, APD) detektiert werden, die mit einer geeigneten Messelektronik zur zeitlich aufgelösten Registrierung gekoppelt ist. Dabei kann z.B. eine Ankunftszeit der einzelnen Photonen relativ zu einem Anregungspuls bestimmt werden oder den einzelnen Photonen können z.B. Zeitstempel relativ zu einem elektronischen Steuerpuls zugewiesen werden. Letzteres ist selbstverständlich nicht nur bei gepulster sondern auch bei kontinuierlicher Bestrahlung der Probe mit dem Beleuchtungslicht möglich). Die zeitlich aufgelöste Erfassung kann z.B. auch mit einem Gating-fähigen Detektor durchgeführt werden (z.B. mittels elekronischem Gating).

Erfindungsgemäß muss das Messzeitintervall zeitlich in Beziehung zu der Bahn der Intensitätsverteilung gesetzt werden. Es muss also (zumindest implizit) die Phasenverschiebung zwischen der Zeitreihe der Lichtemissionen und der Zeitreihe der Positionen der Intensitätsverteilung bestimmt werden. Dies kann z.B. durch eine zeitliche Koordination der Steuerelektronik eines Strahlscanners (z.B. Galvoscanners) mit der Messelektronik des Detektors erfolgen.

Die Auswertung des Emissionssignals wird mit einer Recheneinheit durchgeführt, die mit dem erfindungsgemäßen Lichtmikroskop gekoppelt oder in dieses integriert ist. Bei der Recheneinheit kann es sich insbesondere um ein *Field Programmable Gate Array* (FPGA), einen *application specific integrated circuit* (ASIC), einen Mikroprozessor oder um einen Computer für vielfältige Anwendungen handeln.

Die Auswertung des Emissionssignals kann während einer Messung, d.h. parallel zur Beleuchtung der Probe mit dem Beleuchtungslicht, oder auch nach einer Messung durchgeführt werden.

Gemäß einer Ausführungsform wird die Intensitätsverteilung mittels eines mechanischen Scanners relativ zu der Probe verlagert, insbesondere wobei die Intensitätsverteilung kontinuierlich verlagert werden kann. Im Gegensatz zu z.B. elektrooptischen oder akustooptischen Scannern weisen mechanische Scanner bewegliche Komponenten auf, die z.B. einen Lichtstrahl ablenken oder einen Probenhalter gegenüber einem Lichtstrahl verlagern. Der mechanische Scanner kann z.B. ein Galvanometerscanner, ein resonanter Scanner oder ein piezoelektrischer Scanner sein. Insbesondere kann es sich bei dem mechanischen Scanner um einen Strahlscanner handeln, der einen Beleuchtungslichtstrahl des Beleuchtungslichts verlagert. Hierfür eignen sich z.B. Galvanometerscanner. Alternativ kann der mechanische Scanner z.B. auch mit einem Probentisch gekoppelt sein, so dass die Probe von dem Scanner relativ zu einem stationären Lichtstrahl verlagert wird. Für letztere Ausführungsform sind z.B. Piezoscanner gut geeignet.

Mechanische Scanner können resonant oder nicht-resonant betrieben werden. Resonante mechanische Scanner haben bestimmte erwünschte Eigenfrequenzen, bei denen sie betrieben werden. Zu den nicht-resonanten mechanischen Scannern gehören Galvanometer-Scanner, bei denen typischerweise jeweils ein Galvanometer-Antrieb mit je einem Spiegel gekoppelt ist, so dass durch ein in die Galvanometerspulen eingespeistes Stromsignal ein Winkel des Spiegels um die Drehachse eingestellt werden kann. Bei Galvanometerscannern stehen die Drehachsen der Spiegel typischerweise nicht-parallel zur optischen Achse des einfallenden Lichtstrahls. Für jede Raumrichtung, in der der Strahl abgelenkt werden soll, ist mindestens ein beweglicher mit einem Galvanometer-Antrieb gekoppelter Spiegel vorgesehen. Weiterhin sind mechanische Scanner mit sogenannten Risley-Prismen-Paaren bekannt, wobei der Beleuchtungslichtstrahl nacheinander zwei keilförmige Prismen durchläuft, die um parallele Drehachsen rotieren.

Mechanische Scanner sind typischerweise kostengünstiger, einfacher aufgebaut und robuster als beispielsweise elektrooptische Scanner (die z.B. in MINFLUX-Mikroskopen nach dem Stand der Technik verwendet werden) oder akustooptische Scanner. Mechanische Scanner lassen sich vorteilhafterweise schnell und genau ansteuern, um die Intensitätsverteilung des Beleuchtungslichts auf der Bahn zu verlagern. Somit ermöglichen mechanische Scanner in Kombination mit dem erfindungsgemäßen Positionsbestimmungsverfahren eine besonders einfache, robuste und kostengünstige Durchführung eines MINFLUX-Verfahrens.

Alternativ lässt sich das erfindungsgemäße Verfahren mit den weiter oben beschriebenen Vorteilen natürlich auch mit elektrooptischen oder akustooptischen Scannern durchführen.

Gemäß einer weiteren Ausführungsform wird mittels Fourieranalyse des Emissionssignals mindestens eine Ortskoordinate des Emitters geschätzt. Dabei kann das Emissionssignal z.B. mittels eines Fast Fourier Transform (FFT)-Algorithmus in Komponenten einer Fourierreihe zerlegt werden. Aus bei der Fourieranalyse bestimmten Fourier-Koeffizienten kann dann ein Positionsschätzer für die Position des Emitters bezüglich der mindestens einen Ortskoordinate abgeleitet werden und mittels des abgeleiteten Positionsschätzers kann die Position bestimmt werden. Die Fourieranalyse kann dabei insbesondere auf Basis einer Kreisfrequenz der Bewegung der Intensitätsverteilung auf der Bahn durchgeführt werden, da das Emissionssignal mit dieser Kreisfrequenz moduliert ist, wenn die vermutete Position des Emitters nicht mit dessen tatsächlicher Position übereinstimmt. Letzteres ist selbstverständlich auch möglich, wenn die Bewegung der Intensitätsverteilung nicht kreisförmig ist, insbesondere auch dann, wenn die Bewegung durch mehrere unterschiedliche Kreisfrequenzen gekennzeichnet ist (wie z.B. bei bestimmten Hypotrochoiden oder Lissajous-Figuren). Die Fourieranalyse kann zeitlich diskret oder kontinuierlich durchgeführt werden.

Gemäß einer weiteren Ausführungsform werden aus dem Emissionssignal auf Basis der Formeln

$$\hat{x} = \int_0^{N \cdot 2\pi/\omega} E(t) \cdot \cos(k \cdot \omega t) dt \quad \text{und} \quad \hat{y} = \int_0^{N \cdot 2\pi/\omega} E(t) \cdot \sin(k \cdot \omega t) dt$$

Schätzwerte für eine erste Ortskoordinate und eine zweite Ortskoordinate des Emitters ermittelt, wobei E(t) das Emissionssignal bezeichnet, $t$ die Zeit bezeichnet, $\omega$ eine Kreisfrequenz der Bewegung der Intensitätsverteilung auf der Bahn bezeichnet, und $N$ und $k$ natürliche Zahlen sind, wobei zur Ermittlung der ersten Ortskoordinate und der zweiten Ortskoordinate ein, insbesondere vorbekannter, örtlicher Intensitätsverlauf der Intensitätsverteilung zu Grunde gelegt wird. Insbesondere kann dabei $k=1$ sein (d.h. es werden jeweils die ersten Koeffizienten der Fourierreihe bestimmt). $\hat{x}$ und $\hat{y}$ sind dabei Fourier-Koeffizienten. Insbesondere werden die Schätzwerte für die erste Ortskoordinate und die zweite Ortskoordinate erhalten, indem ein mittels einer nummerischen Integration des Produkts des Emissionssignals mit einer Kosinus- bzw. Sinusfunktion (welche die Kreisfrequenz als Argument aufweist) erhaltener Wert einem analytisch bestimmten Fourierkoeffizienten gleichgesetzt wird, der eine Funktion der entsprechenden ersten oder zweiten Ortskoordinate ist. Anschließend kann durch Auflösen der Gleichung nach der ersten oder zweiten Ortskoordinate der entsprechende Schätzwert erhalten werden. Insbesondere kann zum Erhalten der Schätzwerte ein aus den durch nummerische Integration erhaltenen Werten und den analytisch bestimmten Fourierkoeffizienten erhaltenes Gleichungssystem gelöst werden. Die erste Ortskoordinate und die zweite Ortskoordinate können kartesische Koordinaten sein. Z.B. können die erste Ortskoordinate und die zweite Ortskoordinate die Lage des Emitters in einer Fokusebene in der Probe beschreiben, die senkrecht zu einer optischen Achse ist, entlang der ein Beleuchtungslichtstrahl die Probe mit dem Beleuchtungslicht beleuchtet. In diesem Fall kann die erste Ortskoordinate auch als x-Koordinate und die zweite Ortskoordinate als y-Koordinate bezeichnet werden. Alternativ oder zusätzlich kann eine Ortskoordinate (auch als z-Koordinate bezeichnet) die Lage des Emitters in einer axialen Richtung parallel zur optischen Achse beschreiben, z.B. für eine Lokalisierung des Emitters in drei Dimensionen oder für eine Lokalisierung in einer xz-Ebene oder yz-Ebene. Natürlich sind die erste Ortskoordinate und die zweite Ortskoordinate nicht auf kartesische Koordinaten beschränkt. Ebenso kann es sich bei den Ortskoordinaten z.B. um Polarkoordinaten oder Zylinderkoordinaten handeln.

Gemäß einer weiteren Ausführungsform wird das Emissionssignal durch die Formel $E(t) = a \cdot [(x - I_x(t))^c + (y - I_y(t))^c]$ oder $E(t) = a \cdot [(x - I_x(t))^c + (y - I_y(t))^c] + b$ repräsentiert, wobei $x$ die erste Ortskoordinate einer tatsächlichen Position des Emitters ist, wobei $y$ die zweite Ortskoordinate der tatsächlichen Position des Emitters ist, wobei $I_x(t)$ eine durch die Bewegung der Intensitätsverteilung auf der Bahn verursachte zeitliche Änderung der ersten Ortskoordinate beschreibt, wobei $I_y(t)$ eine durch die Bewegung der Intensitätsverteilung auf der Bahn verursachte zeitliche Änderung der zweiten Ortskoordinate beschreibt, wobei $a$ einen ersten Formparameter der Intensitätsverteilung beschreibt, und wobei $c$ einen zweiten Formparameter der Intensitätsverteilung beschreibt. Insbesondere beschreibt $b$ einen Hintergrund repräsentierenden Parameter. Insbesondere ist der zweite Formparameter eine gerade Zahl ($c = 2n$, wobei $n$ eine natürliche Zahl ist). Weiter insbesondere ist der zweite Formparameter gleich 2 ($c = 2$).

In diesem Fall wird der Verlauf der Intensitätsverteilung durch eine Parabel oder ein höheres Polynom (insbesondere mit $c = 2n$, da der Verlauf dann symmetrisch zum Intensitätsminimum ist) approximiert. Beispielsweise eine donutförmige Intensitätsverteilung kann in der Nähe des zentralen Minimums in guter Näherung als Parabel approximiert werden. Für den Fall, dass c = 2 ist, ist der erste Formparameter $a$ ein Maß für die Steilheit der parabelförmigen Intensitätsverteilung.

Der Hintergrund repräsentierende Parameter $b$ gibt die Lichtintensität für die Bedingungen ($x = I_x$, $y = I_y$) an, d.h. wenn die Position des Minimums der Intensitätsverteilung mit dem tatsächlichen Ort des Emitters zusammenfällt. Die gemessenen Lichtemissionen stammen dann (zumindest dann, wenn das Minimum auch unter experimentellen Bedingungen eine echte Intensitätsnullstelle ist) nicht von dem zu lokalisierenden oder zu verfolgenden Emitter, sondern sind auf Hintergrund zurückzuführen.

Unter dem Begriff "Hintergrund" wird im Kontext der vorliegenden Spezifikation jegliches vom Detektor registrierte Licht verstanden, das nicht von dem aktuell lokalisierten oder verfolgten Emitter stammt. Dies schließt sowohl Hintergrundlicht, das insbesondere von axial über oder unter der Fokusebene gelegenen Emittern stammen kann, als auch z.B. sogenannte *dark counts,* d.h. auf Rauschen des Detektors oder ähnliche Effekte zurückzuführende fälschlich registrierte Photonen, mit ein.

Der Parameter $b$ kann insbesondere auch Null sein. Dies kann insbesondere in Fällen, in denen der Hintergrund nicht wesentlich zum Emissionssignal beiträgt, sinnvoll sein, um die Position des Emitters mit hoher Genauigkeit zu schätzen. Wenn der Hintergrund mittels des Parameters $b$ berücksichtigt wird, kann $b$ z.B. als zeitlich und örtlich konstant angenommen werden. Alternativ kann dem Wert $b$ auch eine örtliche Verteilung des Hintergrunds relativ zu dem Minimum der Intensitätsverteilung des Beleuchtungslichts zugrunde gelegt werden.

Gemäß einer weiteren Ausführungsform werden die zeitliche Änderung der ersten Ortskoordinate und die zeitliche Änderung der zweiten Ortskoordinate jeweils durch eine Sinusfunktion oder Kosinusfunktion repräsentiert.

Eine kreisförmige Bahn der Intensitätsverteilung um die vermutete Position des Emitters mit dem Radius $L/2$ kann z.B. durch die Formeln $I_x(t) = L/2 \cdot \sin(\omega t)$ und $I_y(t) = L/2 \cdot \cos(\omega t)$ beschrieben werden. Die Formeln $I_x(t) = L_1/2 \cdot \sin(\omega t)$ und $I_y(t) = L_2/2 \cdot \cos(\omega t)$ mit unterschiedlichen Amplituden $L_1/2 \neq L_2/2$ beschreiben eine elliptische Bahn. Unter die oben beschriebene Ausführungsform fallen weiterhin z.B. Lissajous-Figuren, die durch die Gleichungen $I_x(t) = L_1/2 \cdot \sin(\omega_1 t)$ und $I_y(t) = L_2/2 \cdot \sin(\omega_2 t)$ oder $I_y(t) = L_2/2 \cdot \cos(\omega_2 t)$ beschrieben werden, wobei $\omega_1$ und $\omega_2$ unterschiedliche Kreisfrequenzen sind, die zueinander in einem festen Verhältnis (gleich einer rationalen Zahl ungleich 1) stehen.

Gemäß einer weiteren Ausführungsform werden die zeitliche Änderung der ersten Ortskoordinate und die zeitliche Änderung der zweiten Ortskoordinate jeweils durch eine gewichtete Summe von Sinusfunktionen und/oder Kosinusfunktionen mit endlich vielen Summanden repräsentiert. D.h. die Änderung jeder Ortskoordinate wird durch mindestens zwei Sinus- und/oder Kosinusfunktionen beschrieben. Die Begriffe Sinusfunktion und Kosinusfunktion sind insofern redundant, als jede Sinusfunktion durch eine Phasenverschiebung von 90° als Kosinusfunktion ausgedrückt werden kann. Insbesondere werden die zeitliche Änderung der ersten Ortskoordinate und die zeitliche Änderung der zweiten Ortskoordinate jeweils durch eine gewichtete Summe von 10 Sinusfunktionen und/oder Kosinusfunktionen oder weniger, weiter insbesondere vier Sinusfunktionen und/oder Kosinusfunktionen oder weniger, weiter insbesondere zwei Sinusfunktionen und/oder Kosinusfunktionen, repräsentiert.

Sowohl Bahnen, bei denen sich die zeitlichen Änderungen der Ortskoordinaten als Sinusfunktionen oder Kosinusfunktionen ausdrücken lassen, als auch Bahnen, bei denen sich die zeitlichen Änderungen der Ortskoordinaten als gewichtete Summen von Sinusfunktionen oder Kosinusfunktionen ausdrücken lassen, haben den Vorteil, dass insbesondere mechanische Scanner wie Galvanometerscanner solche Bahnen auch bei hoher Scangeschwindigkeit mit besonders guter Genauigkeit (d.h. mit besonders geringer Abweichung zwischen der gewünschten Bahn und der tatsächlich abgefahrenen Bahn) realisieren können, wenn sie mit entsprechenden Ansteuersignalen angesteuert werden. Die Bandbreite solcher Scanner lässt sich mit diesen Ansteuersignalen besonders gut ausnutzen.

Gemäß einer weiteren Ausführungsform weisen die Sinusfunktionen und/oder die Kosinusfunktionen unterschiedliche Kreisfrequenzen auf, die in einem festen Verhältnis zueinander stehen. Aus den unterschiedlichen Kreisfrequenzen kann vorteilhafterweise bei der Auswertung des Emissionssignals zusätzliche Information gezogen werden, die z.B. zur Bestimmung eines Formparameters der Intensitätsverteilung oder der Schätzung von Hintergrund verwendet werden kann.

Z.B. kann die erste Ortskoordinate durch die Gleichung $I_x(t) = L_{1,x}/2 \cdot \cos(\omega_1 t) - L_{2,x}/2 \cdot \cos(\omega_2 t)$ und die zweite Ortskoordinate durch die Gleichung $I_y(t) = L_{1,y}/2 \cdot \sin(\omega_1 t) - L_{2,y}/2 \cdot \sin(\omega_2 t)$ beschrieben werden. Die entsprechende Bahn ist eine Epitrochoide.

Alternativ dazu kann die erste Ortskoordinate z.B. auch durch die Gleichung $I_x(t) = L_{1,x}/2 \cdot \cos(\omega_1 t) + L_{2,x}/2 \cdot \cos(\omega_2 t)$ und die zweite Ortskoordinate durch die Gleichung $I_y(t) = L_{1,y}/2 \cdot \sin(\omega_1 t) - L_{2,y}/2 \cdot \sin(\omega_2 t)$ oder $I_y(t) = L_{1,y}/2 \cdot \sin(\omega_1 t) + L_{2,y}/2 \cdot \sin(\omega_2 t)$ beschrieben werden. Die entsprechende Bahn ist eine Hypotrochoide.

Dabei werden Kurven der Form $I_x(t) = L_{1,x}/2 \cdot \cos(\omega_1 t) + L_{2,x}/2 \cdot \cos(\omega_2 t)$; $I_y(t) = L_{1,y}/2 \cdot \sin(\omega_1 t) - L_{2y}/2 \cdot \sin(\omega_2 t))$ auch als Rosetten bezeichnet.

Kurven der Form $I_x(t) = L_{1,x}/2 \cdot \cos(\omega_1 t) + L_{2,x}/2 \cdot \cos(\omega_2 t)$ und $I_y(t) = L_{1,y}/2 \cdot \sin(\omega_1 t) + L_{2,y}/2 \cdot \sin(\omega_2 t)$ werden im Kontext der vorliegenden Spezifikation als Schleifen bezeichnet. Hierunter fallen z.B. die sogenannten Pascal'schen Schnecken. Für Rosetten und Schleifen können insbesondere zusätzlich die Bedingungen $L_{1,x}/2 = L_{1,y}/2$ und $L_{2,x}/2 = L_{2,y}/2$ gelten.

Gemäß einer weiteren Ausführungsform ist die Bahn durch eine Überlagerung unterschiedlicher Kreisfrequenzen beschreibbar, wobei mittels einer Auswertung des Emissionssignals zusätzliche Information gewonnen wird, wobei die zusätzliche Information genutzt wird, um neben der Position des Emitters Schätzwerte für weitere Parameter, z.B. einen Formparameter der Intensitätsverteilung und/oder einen Hintergrund repräsentierenden Parameter, zu ermitteln. Dies ist beispielsweise mit Bahnen möglich, die sich als Lissajous-Figuren oder Hypotrochoiden, insbesondere Rosetten oder Schleifen, mathematisch beschreiben lassen. Solche Bahnen haben insbesondere den Vorteil, dass sie geschlossen und, insbesondere symmetrisch, um ein Zentrum angeordnet sind, an dem sich z.B. die vermutete Position des Emitters befinden kann.

Gemäß einer weiteren Ausführungsform umfassen die Schätzwerte für die weiteren Parameter einen Schätzwert für einen Formparameter der Intensitätsverteilung und/oder einen Schätzwert für Hintergrund.

Gemäß einer weiteren Ausführungsform werden Integrale bzw. Summen über das Emissionssignal über unterschiedliche Integrationsgrenzen bzw. Summationsgrenzen berechnet, um die Schätzwerte für die weiteren Parameter zu ermitteln. Dabei kann es notwendig sein, darauf zu achten, dass die Integrale über die unterschiedlichen Integrationsgrenzen linear unabhängige Gleichungen für die entsprechenden Parameter ergeben, so dass die Parameter durch Lösen eines Gleichungssystems bestimmt werden können. Insbesondere kann dabei ein Integral über einen analytischen Ausdruck für das Emissionssignal berechnet werden, wobei der analytische Ausdruck auf Basis eines von der tatsächlichen Emitterposition abhängigen zeitlichen Verlaufs der Lichtemissionen und auf Basis eines angenommenen örtlichen Verlaufs der Intensitätsverteilung des Beleuchtungslichts gebildet wird. Ein solcher analytischer Ausdruck kann z.B. für die Annahme einer parabelförmigen Intensitätsverteilung $E(t) = a \cdot [(x - I_x(t))^2 + (y - I_y(t))^2]$ oder $E(t) = a \cdot [(x - I_x(t))^2 + (y - I_y(t))^2] + b$ (falls Hintergrund berücksichtigt wird) sein, wobei $I_x(t)$ eine durch die Bewegung der Intensitätsverteilung auf der Bahn verursachte zeitliche Änderung der ersten Ortskoordinate beschreibt, wobei $I_y(t)$ eine durch die Bewegung der Intensitätsverteilung auf der Bahn verursachte zeitliche Änderung der zweiten Ortskoordinate beschreibt, und wobei $a$ einen ersten Formparameter der Intensitätsverteilung beschreibt. Insbesondere beschreibt $b$ einen Hintergrund repräsentierenden Parameter. Dieses Integral kann dann z.B. mit einer nummerisch gebildeten Summe über die registrierten Lichtemissionen verglichen werden, um zusätzlich zu den aus den Fourierkoeffizienten bestimmten Gleichungen eine weitere Gleichung zu erhalten, wobei durch die Lösung des entsprechenden Gleichungssystems zusätzlich zu der Schätzung der Ortskoordinaten ein weiterer Parameter, insbesondere der Formparameter oder der den Hintergrund repräsentierende Parameter, geschätzt wird.

Gemäß einer weiteren Ausführungsform wird, insbesondere zusätzlich zu den Schätzwerten für die erste Ortskoordinate und die zweite Ortskoordinate, auf Basis der Formel $\hat{n}_i = \int_{M \cdot 2\pi/\omega}^{N \cdot 2\pi/\omega} E(t)\, dt$ sowie auf Basis der Formeln $\hat{x} = \int_0^{N \cdot 2\pi/\omega} E(t) \cdot \cos(k \cdot \omega\, t)\, dt$ und $\hat{y} = \int_0^{N \cdot 2\pi/\omega} E(t) \cdot \sin(k \cdot \omega\, t)\, dt$ ein Schätzwert für einen weiteren Parameter, insbesondere einen Formparameter der Intensitätsverteilung und/oder einen Hintergrund repräsentierenden Parameter, ermittelt, wobei M Null oder eine natürliche Zahl kleiner N ist.

Gemäß einer weiteren Ausführungsform werden auf Basis der Formel $\hat{n}_1 = \int_0^{M_1 \cdot 2\pi/\omega} E(t)\, dt$ und der Formel $\hat{n}_2 = \int_{M_1 \cdot 2\pi/\omega}^{M_2 \cdot 2\pi/\omega} E(t)\, dt$ oder aus der Formel $\hat{n}_1 = \int_{M_1 \cdot 2\pi/\omega}^{M_2 \cdot 2\pi/\omega} E(t)\, dt$ und $\hat{n}_2 = \int_{M_2 \cdot 2\pi/\omega}^{N \cdot 2\pi/\omega} E(t)\, dt$ sowie auf Basis der Formeln $\hat{x} = \int_0^{N \cdot 2\pi/\omega} E(t) \cdot \cos(k \cdot \omega\, t)\, dt$ und $\hat{y} = \int_0^{N \cdot 2\pi/\omega} E(t) \cdot \sin(k \cdot \omega\, t)\, dt$ Schätzwerte für weitere Parameter, insbesondere einen Formparameter der Intensitätsverteilung und einen Hintergrund repräsentierenden Parameter, ermittelt, wobei $M_1$ und $M_2$ natürliche Zahlen kleiner $N$ sind, und wobei $M_1$ kleiner ist als $M_2$.

Die Parameter $\hat{n}_i$, $\hat{n}_1$ und $\hat{n}_2$ beschreiben Summen von Lichtemissionen in den Zeitintervallen der Integrationsgrenzen. Indem die in dem entsprechenden Zeitintervall registrierten Lichtemissionen aufsummiert werden und die Summe dem (unter Verwendung eines bekannten Intensitätsverlaufs des Beleuchtungslichts sowie der Bahn der Intensitätsverteilung um die vermutete Position des Emitters) analytisch berechneten Integral gleichgesetzt wird, lässt sich zusätzlich zu den durch Bestimmung der Fourierkoeffizienten $\hat{x}$ und $\hat{y}$ bestimmten Gleichungen eine weitere Gleichung erhalten. Durch Lösen des entsprechenden Gleichungssystems lässt sich neben der ersten Ortskoordinate und der zweiten Ortskoordinate ein weiterer Parameter schätzen, z.B. ein Formparameter des Verlaufs der Intensitätsverteilung (etwa die Steilheit einer Parabel) oder ein den Hintergrund repräsentierender Parameter. Hierbei ist darauf zu achten, dass die Integrationsgrenzen $M_1$ und $M_2$ für die jeweilige verwendete Bahn so gewählt sind, dass linear unabhängige Ausdrücke aus $\hat{n}_1$ und $\hat{n}_2$ (sowie ggf. weiteren $\hat{n}_i$) gebildet werden können, damit das erhaltene Gleichungssystem für die gewünschte Anzahl von Parametern eindeutig lösbar ist.

Auf diese Weise lässt sich eine hochgenaue Positionsschätzung auch bei unbekanntem Formparameter der Intensitätsverteilung und/oder bei unbekanntem Hintergrund durchführen.

Gemäß einer weiteren Ausführungsform wird mittels Phasoranalyse des Emissionssignals eine Winkelkoordinate des Emitters geschätzt, wobei bei der Schätzung der Winkelkoordinate ein örtlicher Intensitätsverlauf der Intensitätsverteilung zu Grunde gelegt wird.

Mittels Phasoranalyse lässt sich vorteilhafterweise auf einfache Weise eine Winkelkoordinate des Emitters in der Fokusebene schätzen. Hieraus lässt sich bereits die Richtung ableiten, in die die Intensitätsverteilung bei einem iterativen MINFLUX-Verfahren verschoben werden muss, um das Zentrum der Bahn näher an die tatsächliche Position des Emitters zu bringen.

Gemäß einer weiteren Ausführungsform wird die Winkelkoordinate auf Basis der Formel $\varphi = \tan^{-1} \hat{y}/\hat{x}$ bestimmt, wobei $\hat{x} = \int_0^{N \cdot 2\pi/\omega} E(t) \cdot \cos(k \cdot \omega\, t)\, dt$ und $\hat{y} = \int_0^{N \cdot 2\pi/\omega} E(t) \cdot \sin(k \cdot \omega\, t)\, dt$, wobei $E(t)$ das Emissionssignal bezeichnet, $t$ die Zeit bezeichnet, $\omega$ eine Kreisfrequenz der Bewegung der Intensitätsverteilung auf der Bahn bezeichnet, und $N$ und $k$ natürliche Zahlen sind.

Es werden also wie weiter oben beschrieben Fourierkoeffizienten aus dem Emissionssignal bestimmt. Aus der arcus-Tangens-Funktion des Quotienten der Fourierkoeffizienten $\hat{y}$ und $\hat{x}$ lässt sich dann der Phasenwinkel $\varphi$ (die

Winkelkoordinate der Position des Emitters) ableiten. Ein Vorteil hierbei ist, dass sich, insbesondere bei der Verwendung einer parabelförmigen Näherung oder einer symmetrischen Polynom-Näherung für den Verlauf der Intensitätsverteilung, der oben beschriebene Formparameter $a$ herauskürzen kann, da dieser in beide Fourierkoeffizienten multiplikativ eingeht, zumindest dann, wenn der Hintergrund nicht berücksichtigt wird. Daher ist der erhaltene Phasenwinkel bei vernachlässigbarem Hintergrund unabhängig von der Form der verwendeten Intensitätsverteilung.

Gemäß einer weiteren Ausführungsform wird mittels der Phasoranalyse weiterhin eine Radialkoordinate des Emitters geschätzt. Somit können z.B. beide Polarkoordinaten des Emitters in der Fokusebene bestimmt werden.

Gemäß einer weiteren Ausführungsform wird die Radialkoordinate auf Basis der Formel $\rho = \dfrac{\sqrt{\hat{x}^2+\hat{y}^2}}{\hat{n}}$ bestimmt, wobei $\hat{x} = \int_0^{N\cdot 2\pi/\omega} E(t)\cdot\cos(k\cdot\omega t)dt, \; \hat{y} = \int_0^{N\cdot 2\pi/\omega} E(t)\cdot\sin(k\cdot\omega t)dt$ und $\hat{n} = \int_0^{N\cdot 2\pi/\omega} E(t)\,dt$.

Zur Bestimmung der Radialkoordinate kann die Summe $\hat{n}$ der Lichtemissionen insbesondere während eines oder mehrerer vollständiger Umläufe der Intensitätsverteilung um die vermutete Position des Emitters ermittelt werden.

Gemäß einer weiteren Ausführungsform wird ein Radius einer kreisförmigen Bahn der Intensitätsverteilung um die vermutete Position des Emitters während des Messzeitintervalls oder zwischen Messzeitintervallen angepasst, wobei aus jeweiligen Lichtemissionen, die unterschiedlichen Radien der Bahn zugeordnet sind, mehrere Emissionssignale ermittelt werden, wobei die Position des Emitters auf Basis von zeitlichen Modulationen der mehreren Emissionssignale, insbesondere durch Fourieranalyse oder Phasoranalyse, geschätzt wird. Der Radius der Kreisbahn kann auf einer im Vergleich zur Kreisbewegung schnellen Zeitskala verändert werden, so dass sich der Radius sprunghaft ändert. Je nach Ausgestaltung des Scanners ergibt sich dabei eine unterschiedlich lange Relaxationszeit, nach der die Intensitätsverteilung des Beleuchtungslichts der durch Steuerparameter vorgegebenen Ortskurve mit ausreichender Genauigkeit folgt. Wenn die Abweichung von der vorgegebenen Ortskurve während der Relaxationszeit so groß ist, dass die Genauigkeit der Positionsschätzung schlechter wird, kann es vorteilhaft sein, die während der Relaxationszeit registrierten Lichtemissionen nicht bei der Positionsschätzung zu berücksichtigen. Alternativ zu einer sprunghaften Änderung des Radius ist es auch möglich, dass der Radius der Kreisbahn auf einer Zeitskala geändert wird, die im Bereich der Geschwindigkeit der Kreisbewegung liegt. Dann resultiert insbesondere eine spiralförmige Bahn, die nach einer gewissen Zeit in eine Kreisbahn mit dem neuen Radius mündet. Wenn die aus einer Ansteuerung resultierende Spiralbahn bekannt und reproduzierbar ist, können ggf. auch auf der Spiralbahn erfasste Lichtemissionen für die Auswertung berücksichtigt werden.

Insbesondere kann der Radius auch auf einen Wert von 0 angepasst werden, d.h. es kann ein durch Bewegung der Intensitätsverteilung auf einer, insbesondere kreisförmigen, Bahn erhaltenes erstes Emissionssignal gemeinsam mit einem zweiten Emissionssignal ausgewertet werden, wobei das zweite Emissionssignal Lichtemissionen umfasst, die registriert werden, während das Intensitätsminimum der Intensitätsverteilung des Beleuchtungslichts stationär an der vermuteten Position des Emitters verweilt.

Gemäß einer weiteren Ausführungsform wird die Intensitätsverteilung auf einer nichtkreisförmigen Bahn um die vermutete Position des Emitters verlagert, wobei die Bahn Teilabschnitte aufweist, die näherungsweise auf Kreisen mit unterschiedlichen Radien um die vermutete Position des Emitters liegen, wobei aus den jeweiligen Teilabschnitten zugeordneten Lichtemissionen mehrere Emissionssignale ermittelt werden, und wobei die Position des Emitters auf Basis von zeitlichen Modulationen der mehreren Emissionssignale, insbesondere durch Fourieranalyse oder Phasoranalyse, geschätzt wird. Eine solche nichtkreisförmige Bahn kann z.B. eine Lissajous-Figur oder eine Hypertrochoide (z.B. eine Rosette oder Schleife) sein.

Durch die mittels Anpassung des Kreisradius oder Zuordnung zu Teilabschnitten der Bahn erhaltenen mehreren Emissionssignale werden vorteilhafterweise zusätzliche unabhängige Datensätze generiert, auf Basis derer die Position des Emitters genauer geschätzt werden kann und/oder auf Basis derer weitere Parameter, z.B. ein Formparameter der Intensitätsverteilung und/oder ein Hintergrund repräsentierender Parameter, geschätzt werden können.

Gemäß einer weiteren Ausführungsform wird auf Basis der mehreren Emissionssignale zusätzlich ein Schätzwert für einen Formparameter der Intensitätsverteilung und/oder ein Schätzwert für Hintergrund ermittelt.

Gemäß einer weiteren Ausführungsform werden auf Basis der Formeln $\hat{x} = \int_0^{N\cdot 2\pi/\omega} E_{L1}(t)\cdot\cos(k\cdot\omega t)\,dt + \int_0^{N\cdot 2\pi/\omega} E_{L2}(t)\cdot\cos(k\cdot\omega t)\,dt,$ $\hat{y} = \int_0^{N\cdot 2\pi/\omega} E_{L1}(t)\cdot\sin(k\cdot\omega t)\,dt +$

$$\int_0^{N\cdot 2\pi/\omega} E_{L2}(t)\cdot \sin(k\cdot \omega t), \quad \hat{n}_1 = \int_0^{N\cdot 2\pi/\omega} E_{L1}(t)\,dt \quad \text{und} \quad \hat{n}_2 = \int_0^{N\cdot 2\pi/\omega} E_{L2}(t)\,dt$$

Schätzwerte für eine erste Ortskoordinate des Emitters und eine zweite Ortskoordinate des Emitters sowie ein Schätzwert für einen weiteren Parameter, insbesondere einen Formparameter der Intensitätsverteilung und/oder einen Hintergrund repräsentierenden Parameter, ermittelt, wobei insbesondere bei der Schätzung ein örtlicher Intensitätsverlauf der Intensitätsverteilung bzw. Intensitätsverteilungen zu Grunde gelegt werden kann, und wobei $E_{L1}(t)$ und $E_{L2}(t)$ den unterschiedlichen Radien zugeordnete Emissionssignale bezeichnen, $t$ die Zeit bezeichnet, $\omega$ eine Kreisfrequenz der Bewegung der Intensitätsverteilung auf der Bahn bezeichnet, und $N$ und $k$ natürliche Zahlen sind. Die unterschiedlichen Radien zugeordneten Emissionssignale können, wie oben beschrieben, z.B. aus Kreisbewegungen der Intensitätsverteilung mit unterschiedlichen Radien oder durch nicht-kreisförmige Bahnen, deren Teilabschnitte näherungsweise auf Kreisen mit unterschiedlichen Radien um die vermutete Position des Emitters liegen, erhalten werden. Da die unterschiedlichen Radien zugeordneten Emissionssignale typischerweise nacheinander registriert werden, kann insbesondere eine getrennte Integration der Emissionssignale (wie oben beschrieben) durchgeführt werden. Alternativ könnte bei passenden Integrationsgrenzen auch eine Integration über die Summe $E_{L1}(t) + E_{L2}(t)$ durchgeführt werden. Nummerische Werte für $\hat{x}$ und $\hat{y}$ können dabei insbesondere aus einer Fouriertransformation eines Summensignals erhalten werden, wobei das Summensignal der Summe der Emissionssignale entspricht. Selbstverständlich kann die Positionsschätzung auch auf Basis eines der Einzelsignale erfolgen, die Verwendung eines Summensignals kann jedoch insbesondere bei geringen Emissionsraten vorteilhaft sein, da in diesem Fall insgesamt mehr Photonen in die Positionsschätzung einfließen.

Auf diese Weise können z.B. von beiden Radien L1 und L2 abhängige Gleichungen für die erste Ortskoordinate, die zweite Ortskoordinate sowie eine von L1 und L2 abhängige Gleichung für einen weiteren Parameter, insbesondere einen Formparameter und/oder einen Parameter für Hintergrund, abgeleitet werden. Das entsprechende Gleichungssystem kann dann für die erste Ortskoordinate, die zweite Ortskoordinate und den oder die weiteren Parameter gelöst werden.

Gemäß einer weiteren Ausführungsform wird, insbesondere während des Verlagerns der Intensitätsverteilung um die vermutete Position des Emitters, eine Leistung des Beleuchtungslichts variiert, wobei aus jeweils bei gleicher Leistung erhaltenen Lichtemissionen mehrere Emissionssignale ermittelt werden, und wobei die Position des Emitters auf Basis von zeitlichen Modulationen der mehreren Emissionssignale, insbesondere durch Fourieranalyse oder Phasoranalyse, geschätzt wird.

Dies ist eine weitere Möglichkeit, unabhängige Datensätze zu erhalten, um eine genauere Positionsschätzung durchzuführen oder weitere Parameter zu bestimmen.

Gemäß einer weiteren Ausführungsform wird auf Basis der mehreren Emissionssignale zusätzlich ein Schätzwert für weitere Parameter, insbesondere einen Formparameter der Intensitätsverteilung und/oder einen Parameter für Hintergrund, ermittelt.

Gemäß einer weiteren Ausführungsform werden auf Basis der Formeln

$$\hat{x} = \int_0^{N\cdot 2\pi/\omega} E_{a1}(t)\cdot \cos(k\cdot \omega t)\,dt + \int_0^{N\cdot 2\pi/\omega} E_{a2}(t)\cdot \cos(k\cdot \omega t)\,dt, \qquad \hat{y} = \int_0^{N\cdot 2\pi/\omega} E_{a1}(t)\cdot \sin(k\cdot \omega t)\,dt +$$

$$\int_0^{N\cdot 2\pi/\omega} E_{a2}(t)\cdot \sin(k\cdot \omega t)\,dt, \quad \hat{n}_1 = \int_0^{N\cdot 2\pi/\omega} E_{a1}(t)\,dt \quad \text{und} \quad \hat{n}_2 = \int_0^{N\cdot 2\pi/\omega} E_{a2}(t)\,dt$$

Schätzwerte für eine erste Ortskoordinate des Emitters und eine zweite Ortskoordinate des Emitters sowie ein Schätzwert für einen weiteren Parameter, insbesondere einen Formparameter der Intensitätsverteilung und/oder einen Parameter für Hintergrund, ermittelt, wobei insbesondere bei der Schätzung ein örtlicher Intensitätsverlauf der Intensitätsverteilung bzw. Intensitätsverteilungen zu Grunde gelegt werden kann, und wobei $E_{a1}(t)$ und $E_{a2}(t)$ den unterschiedlichen Leistungen des Beleuchtungslichts zugeordnete Emissionssignale bezeichnen, $t$ die Zeit bezeichnet, $\omega$ eine Kreisfrequenz der Bewegung der Intensitätsverteilung auf der Bahn bezeichnet, und $N$ und $k$ natürliche Zahlen sind. Auch hier kann die Integration insbesondere (wie oben beschrieben) getrennt über beide Emissionssignale durchgeführt werden, da die Signale typischerweise nacheinander aufgenommen werden. Alternativ dazu ist bei passenden Integrationsgrenzen natürlich auch eine Integration über die Summe $E_{a1}(t) + E_{a2}(t)$ möglich.

Nummerische Werte für $\hat{x}$ und $\hat{y}$ können dabei insbesondere aus einer Fouriertransformation eines Summensignals erhalten werden, wobei das Summensignal der Summe der Emissionssignale entspricht. Auch hier können alternativ die Einzelsignale verwendet werden. Die Verwendung des Summensignals kann sich jedoch aufgrund der höheren Anzahl von Photonen vorteilhaft auf die Genauigkeit der Positionsschätzung auswirken.

Gemäß einer weiteren Ausführungsform wird nach dem Schätzen der Position eine erneute Positionsbestimmung des Emitters durchgeführt, wobei die Intensitätsverteilung des Beleuchtungslichts bei der erneuten Positionsbestimmung auf einer Bahn um die zuvor geschätzte Position des Emitters verlagert wird, wobei in einem weiteren Messzeitintervall weitere Lichtemissionen des Emitters zeitlich aufgelöst erfasst werden, und wobei aus den in dem weiteren Messzeitintervall erfassten Lichtemissionen ein weiteres Emissionssignal erhalten wird, und wobei die Position des Emitters auf Basis einer durch die Verlagerung der Intensitätsverteilung auf der Bahn um die zuvor geschätzte Position hervorgerufenen zeitlichen Modulation des weiteren Emissionssignals erneut geschätzt wird, insbesondere mit erhöhter Genauigkeit. Mit anderen Worten: Das Verfahren wird iterativ durchgeführt. Dies erlaubt eine Positionsbestimmung mit besonders hoher Genauigkeit. Außerdem wird durch ein iteratives Verfahren die Positionsschätzung weitgehend frei von etwaigen systematischen Fehlern, die bei größeren Abständen zwischen der vermuteten Position und der tatsächlichen Position des Emitters entstehen können, da dieser Abstand in den Iterationsschritten sukzessive reduziert wird.

Gemäß einer weiteren Ausführungsform wird für die erneute Positionsbestimmung mindestens ein Parameter der Intensitätsverteilung und/oder mindestens ein Parameter der Bahn angepasst. Insbesondere kann dabei ein von der Bahn durchlaufender Bereich um die geschätzte Position des Emitters verkleinert werden und/oder es kann eine Leistung des Beleuchtungslichts erhöht werden. D.h., es kann z.B. aufgrund einer aus dem vorhergehenden Iterationsschritt mit besserer Genauigkeit als am Anfang bekannten tatsächlichen Emitterposition ein Radius einer kreisförmigen Bahn verändert, insbesondere verkleinert, werden oder es können im Fall einer nichtkreisförmigen Bahn, wie z.B. einer Lissajous-Figur oder einer Hypotrochoide, die den verschiedenen Kreisfrequenzen zugeordneten Amplituden, verändert, insbesondere verkleinert, werden. Da in diesem Fall in der folgenden Iteration weniger Lichtemissionen des Emitters zu erwarten sind, da das Minimum der Intensitätsverteilung auf seiner Bahn im Mittel näher an der tatsächlichen Position des Emitters liegt, kann es vorteilhaft sein, die Gesamtintensität des Beleuchtungslichts zu erhöhen, um ein ausreichendes Signal zu erhalten.

Ein zweiter Aspekt der Erfindung betrifft ein Lichtmikroskop zur Lokalisierung oder zum Verfolgen eines Emitters in einer Probe, insbesondere zur Durchführung eines Verfahrens nach dem ersten Aspekt, aufweisend eine Beleuchtungsoptik, die dazu ausgebildet ist, die Probe mit einer Intensitätsverteilung von Beleuchtungslicht mit einem lokalen Intensitätsminimum zu beleuchten, wobei sich das Beleuchtungslicht auf Lichtemissionen des Emitters auswirkt, einen Scanner, der dazu ausgebildet ist, die Intensitätsverteilung auf einer Bahn um eine vermutete Position des Emitters zu verlagern, eine Detektionsvorrichtung, die dazu ausgebildet ist, Lichtemissionen, insbesondere einzelne Lichtemissionen, des Emitters in einem Messzeitintervall zeitlich aufgelöst zu erfassen, um ein Emissionssignal zu erhalten, und eine Recheneinheit, die dazu ausgebildet ist, eine Position des Emitters in der Probe auf Basis einer durch die Verlagerung der Intensitätsverteilung auf der Bahn hervorgerufenen zeitlichen Modulation des Emissionssignals zu schätzen.

Die Beleuchtungsoptik umfasst insbesondere eine Lichtquelle, z.B. einen Laser, der dazu ausgebildet ist, einen Beleuchtungslichtstrahl zu erzeugen, einen Lichtmodulator (z.B. eine Phasenplatte oder einen ansteuerbaren räumlichen Lichtmodulator), der dazu ausgebildet ist, den Beleuchtungslichtstrahl in seiner Phase und/oder in seiner Amplitude zu modulieren, um am Fokus in der Probe die Intensitätsverteilung mit dem lokalen Intensitätsminimum zu bilden, sowie ein Objektiv, das dazu ausgebildet ist, den Beleuchtungslichtstrahl in die Probe zu fokussieren.

Der Scanner kann aus einer Scanvorrichtung oder mehreren Scanvorrichtungen bestehen. Weiterhin kann der Scanner ein Strahlscanner, der den Beleuchtungslichtstrahl relativ zu der Probe bewegt, oder ein Probenscanner, der die Probe relativ zu dem Beleuchtungslichtstrahl bewegt, sein. Als Strahlscanner eignen sich z.B. mechanische Scanner mit bewegbaren Spiegeln (z.B. Galvanometerscanner), elektrooptische Scanner (EODs) oder eine Kombination eines mechanischen Scanners und eines elektrooptischen Scanners. Ein Probenscanner kann z.B. ein mit einem Probenhalter gekoppelter Piezoscanner sein.

Die Detektionsvorrichtung ist ein Detektor, der zur zeitaufgelösten Erfassung und Registrierung von Lichtemissionen (Photonen) geeignet ist. Hierfür eignet sich z.B. eine *avalanche*-Photodiode (APD), die optional mit einer Auswerteelektronik für die Einzelphotonenregistrierung gekoppelt sein kann. Wenn die Detektionsvorrichtung als Punktdetektor ausgebildet ist, ist es vorteilhaft, eine Lochblende vor der Detektionsvorrichtung anzuordnen, um Hintergrund aus über und unter der Fokusebene liegenden Ebenen zu blockieren. In diesem Fall werden die Lichtemissionen von der Probe also konfokal detektiert. Alternativ dazu ist es z.B. auch möglich, als Detektionsvorrichtung eine zweidimensionale Anordnung von Detektorelementen (sogenannter Array-Detektor) zu verwenden, die in einer Detektionsebene angeordnet sind und somit das Licht aus der Probe ortsaufgelöst erfassen. In diesem Fall kann es vorteilhaft sein, wenn die einzelnen Detektorelemente zur zeitaufgelösten Erfassung und Registrierung von Photonen geeignet sind. Dies ist z.B. bei APD-Arrays der Fall.

Wie bereits erwähnt, kann es sich bei der Recheneinheit insbesondere um ein *Field Programmable Gate Array* (FPGA), einen *application specific integrated circuit* (ASIC), einen Mikroprozessor oder um einen Computer für vielfältige Anwendungen handeln. Die Recheneinheit kann dazu ausgebildet sein, die Positionsschätzung "live", d.h. parallel zur Verlagerung der Intensitätsverteilung und Erfassung der Lichtemissionen durchzuführen. Alternativ dazu können auch parallel zur Verlagerung der Intensitätsverteilung und Erfassung der Lichtemissionen nur Emissionssignale gespeichert werden, wobei die Positionsschätzung auf Basis der gespeicherten Daten zu einem späteren Zeitpunkt durchgeführt wird. Insbesondere im letzteren Fall, aber auch generell, kann die Recheneinheit auch physisch von den übrigen Komponenten des Lichtmikroskops getrennt sein.

Gemäß einer Ausführungsform weist das Lichtmikroskop eine Steuereinheit auf, die dazu ausgebildet ist, Komponenten des Lichtmikroskops, insbesondere den Scanner, die Beleuchtungsoptik, die Detektionsvorrichtung und/oder die Recheneinheit gemäß dem erfindungsgemäßen Verfahren zu steuern. Die Steuereinheit kann gemeinsam mit der Recheneinheit in einer Einheit zusammengefasst sein oder separat von dieser ausgebildet sein.

Ein dritter Aspekt der Erfindung betrifft ein Computerprogramm aufweisend Befehle, die das Lichtmikroskop nach dem zweiten Aspekt dazu veranlassen, das Verfahren nach dem ersten Aspekt durchzuführen.

Weitere Ausführungsformen des Lichtmikroskops nach dem zweiten Aspekt und des Computerprogramms nach dem dritten Aspekt ergeben sich aus den weiter oben dargestellten Ausführungsformen des Verfahrens nach dem ersten Aspekt. Umgekehrt ergeben sich weitere Aspekte des Verfahrens nach dem ersten Aspekt und des Computerprogramms nach dem dritten Aspekt aus Ausführungsformen des Lichtmikroskops nach dem zweiten Aspekt.

Vorteilhafte Weiterbildungen der Erfindung ergeben sich aus den Patentansprüchen, der Beschreibung und den Zeichnungen und den zugehörigen Erläuterungen zu den Zeichnungen. Die beschriebenen Vorteile von Merkmalen und / oder Merkmalskombinationen der Erfindung sind lediglich beispielhaft und können alternativ oder kumulativ zur Wirkung kommen.

Hinsichtlich des Offenbarungsgehalts (aber nicht des Schutzbereichs) der ursprünglichen Anmeldungsunterlagen und des Patents gilt Folgendes: Weitere Merkmale sind den Zeichnungen - insbesondere den dargestellten relativen Anordnungen und Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen, was aber nicht für die unabhängigen Patentansprüche des erteilten Patents gilt.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

Im Folgenden werden Ausführungsbeispiele der Erfindung anhand der Figuren beschrieben. Diese beschränken nicht den Gegenstand dieser Offenbarung und den Schutzumfang.

## Kurzbeschreibung der Figuren

Fig. 1     zeigt ein Ausführungsbeispiel eines erfindungsgemäßen Lichtmikroskops;

Fig. 2     zeigt ein Ausführungsbeispiel eines erfindungsgemäßen Lichtmikroskops;

Fig. 3     zeigt einen Scanner für ein erfindungsgemäßes Lichtmikroskop nach einem Ausführungsbeispiel;

Fig. 4     zeigt einen Scanner für ein erfindungsgemäßes Lichtmikroskop nach einem weiteren Ausführungsbeispiel;

Fig. 5     zeigt ein Schema, welches ein Ausführungsbeispiel des erfindungsgemäßen Verfahrens mit einer kreisförmigen Bahn illustriert;

Fig. 6     zeigt ein Beispiel für ein bei dem erfindungsgemäßen Verfahren erhaltenes Emissionssignal;

Fig. 7     zeigt ein Schema, welches ein Ausführungsbeispiel des erfindungsgemäßen Verfahrens mit einer schleifenförmigen Bahn illustriert;

Fig. 8     zeigt ein Schema, welches ein Ausführungsbeispiel des erfindungsgemäßen Verfahrens mit einer rosettenförmigen Bahn illustriert;

Fig. 9     zeigt ein Schema, welches ein Ausführungsbeispiel des erfindungsgemäßen Verfahrens mit einer Bahn in der Form einer Lissajous-Figur illustriert.

## Beschreibung der Figuren

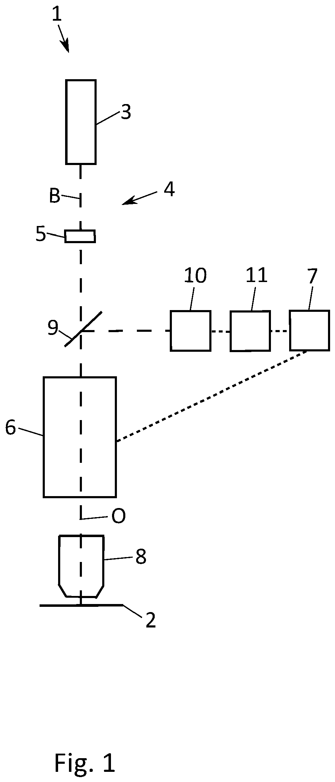

**Fig. 1** zeigt ein Ausführungsbeispiel eines erfindungsgemäßen Lichtmikroskops 1, nämlich eines MINFLUX-Mikroskops, mit einer Lichtquelle 3, insbesondere einem Laser, die einen Beleuchtungslichtstrahl B erzeugt, wobei der Beleuchtungslichtstrahl B insbesondere ein Anregungslichtstrahl ist, der Emitter E in einer Probe 2 zur Lichtemission, insbesondere Lumineszenzemission, weiter insbesondere Fluoreszenzemission, anregt.

Der Beleuchtungslichtstrahl B durchläuft eine Beleuchtungsoptik 4, die einen Lichtmodulator 5, z.B. einen Phasenfilter oder einen räumlichen Lichtmodulator mit ansteuerbaren Pixeln, aufweist. Der Lichtmodulator 5 moduliert insbesondere die Phase des Beleuchtungslichtstrahls B so, dass am Fokus in der Probe 2 durch Interferenz eine Intensitätsverteilung des Beleuchtungslichts mit einem zentralen, d.h. auf einer optischen Achse O des Beleuchtungslichtstrahls B gelegenen, Intensitätsminimum, gebildet wird.

Über einen Strahlteiler 9, der das Beleuchtungslicht von dem von der Probe 2 ausgehenden Emissionslicht trennt, gelangt der Beleuchtungslichtstrahl B zu einem Scanner 6, der den Beleuchtungslichtstrahl B relativ zu der Probe 2 verlagert. Der Scanner 6 ist insbesondere als mechanischer Scanner, z.B. als Galvanometerscanner, ausgebildet.

Eine Steuereinheit 7 ist mit dem Scanner 6 verbunden und stellt dem Scanner 6 Ansteuersignale zur Verfügung, die Zustände mindestens einer optischen Komponente des Scanners 6, z. B. eines drehbaren Spiegels, festlegen, um die Intensitätsverteilung, das heißt deren lokales Minimum, auf einer, insbesondere kontinuierlichen, Bahn um eine erwartete Position des Emitters in der Probe 2 zu verlagern.

Der Beleuchtungslichtstrahl B wird von einem Objektiv 8 in die Probe 2 fokussiert, um die Intensitätsverteilung des Beleuchtungslichts mit dem zentralen Minimum zu bilden.

Von dem Beleuchtungslicht angeregte Emitter in der Probe 2 emittieren Emissionslicht, insbesondere Fluoreszenzlicht, das von dem Objektiv 8 zu einem Emissionslichtstrahl gesammelt und von dem Scanner 6 entscannt wird. Anschließend wird der Emissionslichtstrahl an dem Strahlteiler 9 in einen Detektionsstrahlengang reflektiert, wo eine Detektionsvorrichtung 10, insbesondere ein Punktdetektor wie ein APD oder ein ortsauflösender Detektor wie ein APD-Array, angeordnet ist.

Die Detektionsvorrichtung 10 detektiert und registriert von dem Emitter E in der Probe 2 ausgesendete Lichtemissionen L zeitaufgelöst und erzeugt aus den registrierten Lichtemissionen L ein Emissionssignal S.

Die Detektionsvorrichtung 10 ist mit einer Recheneinheit 11 gekoppelt, welche eine zeitliche Modulation des aus Lichtemissionen gebildeten Emissionssignals S auswertet und daraus eine Position des Emitters E in der Probe 2 schätzt. Dazu kann die Recheneinheit 11 z.B. auf Basis einer Kreisfrequenz der Bewegung der Intensitätsverteilung um die erwartete Position des Emitters E gebildete Fourierkoeffizienten ermitteln und die Position des Emitters E auf Basis der Fourierkoeffizienten schätzen. Alternativ kann die Recheneinheit 11 z.B. auch eine Phasoranalyse durchführen, um die Position des Emitters E zu schätzen.

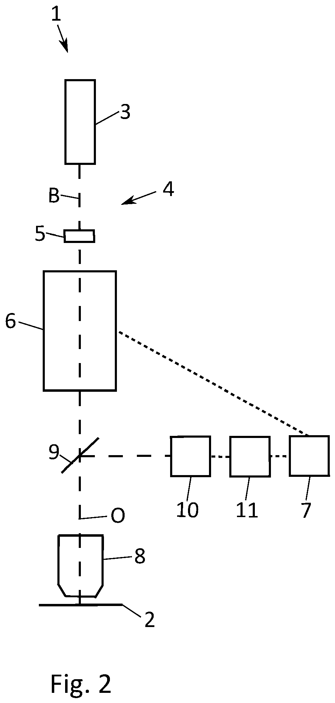

**Fig. 2** zeigt ein weiteres Ausführungsbeispiel eines erfindungsgemäßen Lichtmikroskops 1. Bei diesem ist der Scanner 6 im Beleuchtungsstrahlengang zwischen der Lichtquelle 3 und dem Strahlteiler 9 angeordnet, so dass der Scanner 6 das von der Probe 2 ausgehende Emissionslicht nicht entscannt (sogenannter *non-descanned*-Aufbau). Insbesondere in diesem Fall kann der Scanner 6 z.B. auch ein elektrooptischer Deflektor sein. Abgesehen von der Position des Scanners 6 im Strahlengang sind die Komponenten und Funktionen des Lichtmikroskops 1 identisch mit den in **Fig. 1** gezeigten und oben beschriebenen Komponenten und Funktionen. Gleiche Komponenten sind dabei mit identischen Bezugszeichen markiert.

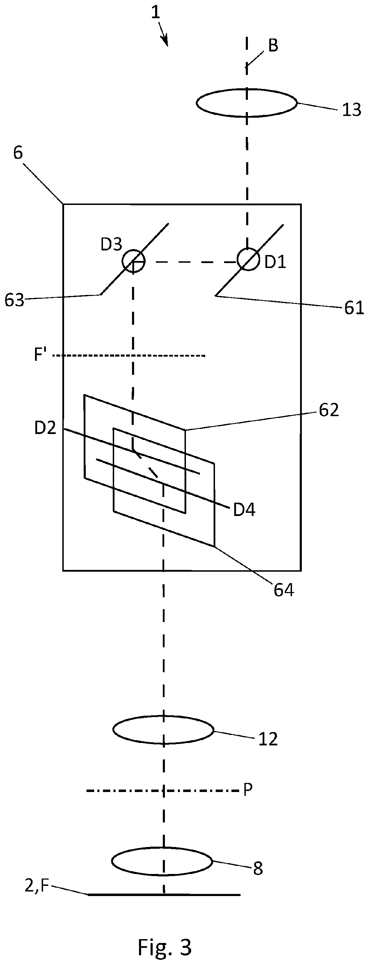

**Fig. 3** zeigt ein erstes Ausführungsbeispiel eines Scanners 6 (hier ein Strahlscanner) für ein Lichtmikroskop 1 gemäß der Erfindung, eine unter der Bezeichnung Quad-Scanner bekannte Form eines Galvanometerscanners mit vier optischen Komponenten 61,62,63,64, die als jeweils mit einem Galvoantrieb gekoppelte drehbare Spiegel ausgebildet sind. Die optischen Komponenten sind von dem jeweiligen Galvoantrieb getrieben jeweils um Drehachsen D1,D2,D3,D4 drehbar. Die erste Drehachse D1 der ersten optischen Komponente 61 und die dritte Drehachse D3 der dritten optische Komponente 63 sind parallel zueinander und die zweite Drehachse 62 der zweiten optischen Komponente 62 und die vierte Drehachse 64 der vierten optischen Komponente 64 sind ebenfalls parallel zueinander. Die erste optische Komponente 61 und die dritte optische Komponente 63 lenken den Beleuchtungslichtstrahl B gemeinsam in einer ersten Raumrichtung x relativ zu der Probe 2 ab und die zweite optische Komponente 62 und die vierte optische Komponente 64 lenken den Beleuchtungslichtstrahl B gemeinsam in einer zweiten Raumrichtung y relativ zu der Probe 2 ab. Der Beleuchtungslichtstrahl B wird in dem in **Fig. 3** gezeigten Beispiel nacheinander von der ersten optischen Komponente 61, der dritten optischen Komponente 63, der zweiten optischen Komponente 62 und der vierten optischen Komponente 64 abgelenkt. Dies ist jedoch nur eine von vielen möglichen Konfigurationen.

Zwischen der dritten optischen Komponente 63 und der zweiten optischen Komponente 62 befindet sich eine Bildebene F', die zu einer Fokusebene F in der Probe 2 konjugiert ist. Mit anderen Worten: Die Objektivlinse 8 und eine Tubuslinse 12 bilden ein optisches Relais, das die Fokusebene F in die Bildebene F' innerhalb des Scanners 6 abbildet. Eine Fokussierlinse 13 fokussiert den von der Lichtquelle 3 ausgehenden Beleuchtungslichtstrahl B in diese Bildebene F'.

Die erste optische Komponente 61 und die dritte optische Komponente 63 werden insbesondere so angesteuert, dass der Beleuchtungslichtstrahl B unabhängig von der Stellung der drehbaren Spiegel stets denselben Punkt in einer Pupille P (Rückapertur) der Objektivlinse 8 trifft. Unterschiedliche Auslenkungen führen dann nur zu einer Verkippung des Beleuchtungslichtstrahls B in der Pupille P, die durch die Fokussierung mittels der Objektivlinse 8 in einer lateralen Verlagerung des Fokus in der Probe 2 in der ersten Raumrichtung x führt. Dasselbe Prinzip gilt insbesondere auch für die Auslenkung in der zweiten Raumrichtung y.

Dies hat insbesondere für die MINFLUX-Mikroskopie den Vorteil, dass die Intensitätsverteilung des Beleuchtungslichts B in der Probe 2 unabhängig von ihrer lateralen Position konstant bleibt.

Wenn die optischen Komponenten so angesteuert werden sollen, dass der Beleuchtungslichtstrahl B für jede Auslenkung denselben Punkt in der Pupille P des Objektivs 8 trifft, werden die erste optische Komponente 61 und die dritte optische Komponente 63 insbesondere gemeinsam mit einem ersten Ansteuersignal angesteuert, das die Verlagerung der Intensitätsverteilung in der ersten Raumrichtung x festlegt. Dasselbe gilt insbesondere für die zweite optische Komponente 62 und die vierte optische Komponente 64 bezüglich der zweiten Raumrichtung y.

Insbesondere dann, wenn kleine Verschiebungen in der Pupille P tolerierbar sind, z.B. weil die resultierenden Verformungen der Intensitätsverteilung vernachlässigbar klein sind, oder weil sich die resultierenden Effekte auf das Emissionssignal für die verschiedenen, insbesondere symmetrisch um ein Zentrum verteilten, Positionen der Intensitätsverteilung herausmitteln, kann auch nur die erste optische Komponente 61 oder nur die dritte optische Komponente 63 mit dem Ansteuersignal beaufschlagt werden, um die Auslenkung der Intensitätsverteilung in der ersten Raumrichtung x zu erreichen, während die andere optische Komponente 61 oder 63 in Ruhe gehalten wird oder eine definierte Bewegung (insbesondere geringerer Frequenz und/oder Amplitude) ausführt. Dies gilt analog für die Ansteuerung der zweiten optischen Komponente 62 oder der vierten optischen Komponente 64.

In den zuletzt beschriebenen Fällen ist es bei Verwendung der in **Fig. 3** gezeigten Konfiguration günstig, jeweils nur die erste optische Komponente 61 und die vierte optische Komponente 64 anzusteuern, da diese optischen Komponenten am weitesten von der Bildebene F' entfernt sind, und somit dieselbe Bewegungsamplitude der Intensitätsverteilung in der Probe 2 mit einer geringeren Amplitude der Drehung der optischen Komponenten um die jeweiligen Drehachsen (einem geringeren Hub) erreicht werden kann.

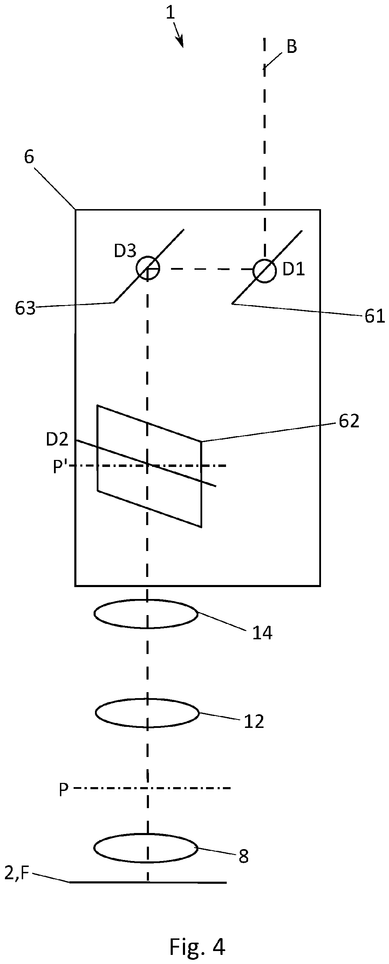

**Fig. 4** zeigt ein weiteres Beispiel eines Scanners 6 (eines Strahlscanners) für das erfindungsgemäße Lichtmikroskop 1, eine als Tandem-Scanner, Pupillenscanner oder x2y-Scanner bezeichnete Variante eines Galvanometer-Scanners.

Der Scanner 6 weist eine um eine erste Drehachse D1 drehbare erste optische Komponente 61, eine um eine zweite Drehachse D2 drehbare zweite optische Komponente 62 und eine um eine dritte Drehachse D3 drehbare dritte optische Komponente 63 auf, die jeweils als mit einem Galvanometer-Antrieb gekoppelte Spiegel ausgebildet sind.

Der Beleuchtungslichtstrahl B wird nacheinander von der ersten optischen Komponente 61, der dritten optischen Komponente 62 und der zweiten optischen Komponente 62 abgelenkt. Es sind jedoch selbstverständlich auch andere Anordnungen möglich.

Die erste optische Komponente 61 und die dritte optische Komponente 63 lenken den Beleuchtungslichtstrahl B gemeinsam in einer ersten Raumrichtung x ab und die zweite optische Komponente lenkt den Beleuchtungslichtstrahl B in einer zweiten Raumrichtung y ab.

Bei dem in **Fig. 4** dargestellten Scanner 6 ist die zweite optische Komponente 62 in einer Pupillenebene P' angeordnet. Dies wird durch eine Abbildung der Pupille P (Rückapertur) der Objektivlinse 8 durch die Tubuslinse 12 und eine Scanlinse 14 realisiert.

Gemäß einer Variante des in **Fig. 4** gezeigten Scanners 6 ist die zweite optische Komponente 62, die den Beleuchtungslichtstrahl B in der zweiten Raumrichtung y ablenkt, ein drehbarer Spiegel eines resonanten mechanischen Scanners, während die erste optische Komponente 61 und die dritte optische Komponente an Galvomotoren gekoppelte Drehspiegel sind. In diesem Fall wird die zweite optische Komponente 62 insbesondere mit dem Ansteuersignal mit der größten Frequenz beaufschlagt.

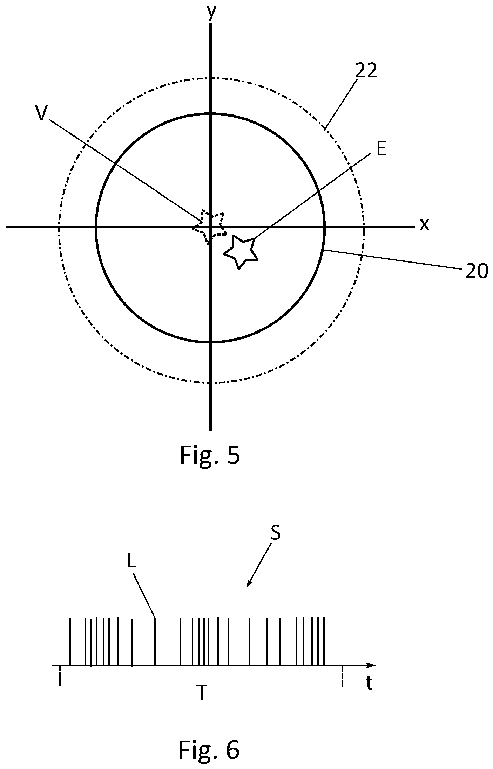

**Fig. 5** zeigt schematisch ein Beispiel des erfindungsgemäßen Verfahrens, bei dem eine Intensitätsverteilung des Beleuchtungslichts mit einem zentralen Minimum auf einer Bahn 20 in der Probe 2 in einem Nahbereich 22 einer vermuteten Position V eines Emitters E verlagert wird. Der Nahbereich 22 kann z.B. ein Kreis mit einem Durchmesser sein, welcher der optischen Beugungsgrenze bei den gegebenen Bedingungen (insbesondere Wellenlänge des Beleuchtungslichts, Emissionsspektrum des Emitters, numerische Apertur des Objektivs) ist. Die vermutete Position V ist als Stern mit gestrichelten Linien dargestellt, die tatsächliche Position des Emitters E als Stern mit durchgezogenen Linien.

In dem in **Fig. 5** dargestellten Beispiel ist die Bahn 20 kreisförmig, wobei das Zentrum des Kreises an der vermuteten Position V des Emitters E liegt.

Weiterhin ist aus **Fig. 5** ersichtlich, dass die vermutete Position V von der tatsächlichen Position des Emitters E abweicht, so dass der zeitliche Verlauf der Lichtemissionen L des Emitters E (insbesondere der zeitliche Verlauf der Wahrscheinlichkeit, dass der Emitter E zu einem gegebenen Zeitpunkt ein Photon emittiert) auf der Zeitskala der Bewegung der Intensitätsverteilung auf der Bahn 20 moduliert ist.

**Fig. 6** zeigt ein Beispiel für den zeitlichen Verlauf eines Emissionssignals S in einem Messzeitintervall T, wobei das Emissionssignal S aus einzelnen von einem Detektor registrierten Lichtemissionen L des Emitters E besteht.

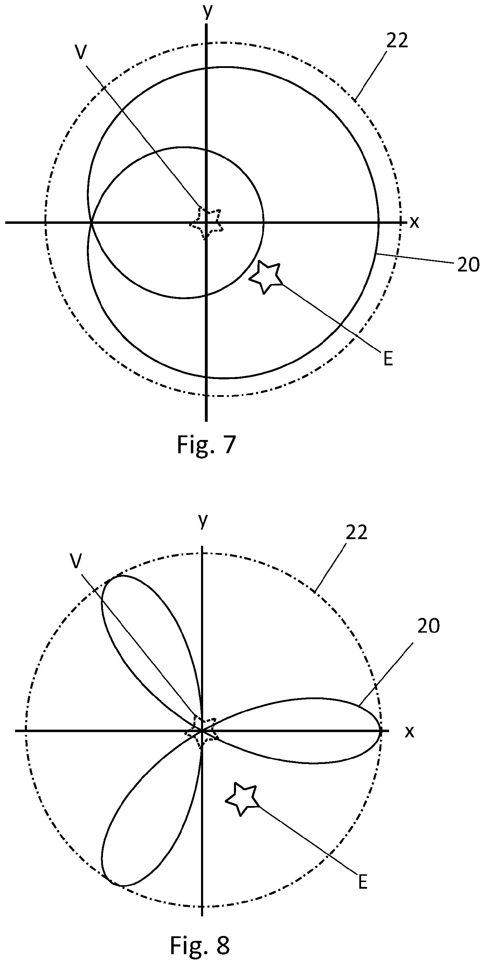

**Fig. 7** zeigt schematisch ein weiteres Ausführungsbeispiel des erfindungsgemäßen Verfahrens, bei dem die Intensitätsverteilung des Beleuchtungslichts in einem Nahbereich 22 auf einer nicht-kreisförmigen Bahn 20 um die vermutete Position V des Emitters E (gestrichelter Stern) bewegt wird. Die tatsächliche Position des Emitters E ist wie in **Fig. 5** durch einen Stern mit durchgezogenen Linien symbolisiert.

Die Bahn 20 ist hier eine Pascal'sche Schnecke, eine Unterform der in der vorliegenden Anmeldung als Schleife bezeichneten Bahn 20, die zu den Hypotrochoiden gehört und mathematisch durch den zeitlichen Verlauf der x-Koordinate in der Fokusebene gemäß der Formel $x = L_1/2 \cdot \cos(\omega_1 t) + L_2/2 \cdot \cos(\omega_2 t)$ und den zeitlichen Verlauf der y-Koordinate in der Fokusebene gemäß der Formel $y = L_1/2 \cdot \sin(\omega_1 t) + L_2/2 \cdot \sin(\omega_2 t)$ beschrieben werden kann. In dem konkreten dargestellten Beispiel gelten die Bedingungen $\omega_1 = 2\omega_2$ und $L_2 = 2L_1$.

**Fig. 8** ist ein Schema eines weiteren Ausführungsbeispiels des erfindungsgemäßen Verfahrens, bei dem die Intensitätsverteilung des Beleuchtungslichts in einem Nahbereich 22 auf einer nicht-kreisförmigen Bahn 20 um die vermutete Position V des Emitters E (gestrichelter Stern) bewegt wird. Die tatsächliche Position des Emitters E ist wie in **Fig. 5** durch einen Stern mit durchgezogenen Linien symbolisiert.

Die Bahn 20 gemäß **Fig. 8** ist eine sogenannte Rosette oder Kleeblattkurve, eine weitere Unterform der Hypotrochoiden. Solche Bahnen 20 können mathematisch durch den zeitlichen Verlauf der x-Koordinate in der Fokusebene gemäß der Formel

$$x = L_1^x/2 \cdot \cos(\omega_1^x t) + L_2^x/2 \cdot \cos(\omega_2^x t)$$

und den zeitlichen Verlauf der y-Koordinate in der Fokusebene gemäß der Formel y =

$$L_1^y/2 \cdot \sin(\omega_1^y t) - L_2^y/2 \cdot \sin(\omega_2^y t)$$

beschrieben werden. In dem konkreten dargestellten Beispiel betragen die Frequenzverhältnisse $\omega_1^x/\omega_2^x$ und $\omega_1^y/\omega_2^y$ jeweils 2/1 und die Amplituden $L_1^x/2, L_2^x/2$, $L_1^y/2$ und $L_2^y/2$ sind identisch.

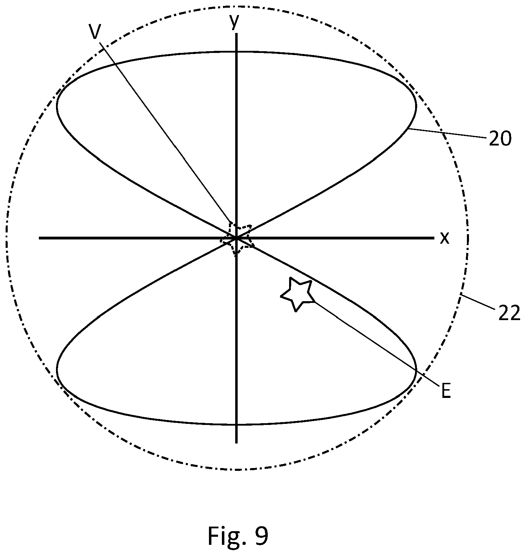

In **Fig. 9** ist ein weiteres Ausführungsbeispiel des erfindungsgemäßen Verfahrens schematisch dargestellt, bei dem die Intensitätsverteilung des Beleuchtungslichts in einem Nahbereich 22 auf einer nicht-kreisförmigen Bahn 20 um die vermutete Position V des Emitters E (gestrichelter Stern) bewegt wird. Die tatsächliche Position des Emitters E ist wie in **Fig. 5** durch einen Stern mit durchgezogenen Linien symbolisiert. Die Bahn 20 gemäß **Fig. 9** ist eine Lissajous-Figur.

Solche Bahnen 20 lassen sich mathematisch durch den Verlauf der x-Koordinate in der Fokusebene gemäß der Formel $x = L_x/2 (\sin \omega_1 t)$ und den Verlauf der y-Koordinate in der Fokusebene gemäß der Formel $y = L_y/2 (\sin \omega_2 t)$ erzeugen. In dem dargestellten Beispiel gilt für die Frequenzen $\omega_1 = 2\omega_2$ und für die Amplituden $L_x/2 = L_y/2$.

Die in **Fig. 5** und **Fig. 7** bis **Fig. 9** gezeigten Bahnen 20 können z.B. mit dem in **Fig. 1** oder **Fig. 2** dargestellten Lichtmikroskop 1 generiert werden, indem ein mittels der Lichtquelle 3 (z.B. eines Lasers) ein Beleuchtungslichtstrahl B des Beleuchtungslichts erzeugt wird, von dem Lichtmodulator 5 (z.B. einem *spatial light modulator* oder einer Phasenplatte) z.B. mit einem Vortex-Phasenmuster phasenmoduliert, von dem Objektiv 8 in die Probe 2 fokussiert wird, so dass (ggf. nach zirkularer Polarisation des Lichtstrahls) am Fokus in der Probe 2 eine donutförmige Intensitätsverteilung des Beleuchtungslichts entsteht, wobei die Intensitätsverteilung durch den Scanner 6 (z.B. einen Galvanometerscanner) in der Probe 2 auf der Bahn 20 verlagert wird. Dabei können z.B. Ansteuersignale für die einzelnen beweglichen Spiegel des Galvanometerscanners den oben für die verschiedenen Bahnen 20 angegebenen mathematischen Beschreibungen der x- und y-Koordinaten der Intensitätsverteilung entsprechen oder von diesen abgeleitet sein. Das Beleuchtungslicht kann z.B. Anregungslicht sein, welches Emitter E in der Probe zur Fluoreszenz anregt. Die von dem Emitter E ausgesendeten Fluoreszenzphotonen können dann während des Messzeitraums von der Detektionsvorrichtung 10 (z.B. umfassend mindestens eine *avalanche*-Photodiode, APD) erfasst und registriert werden, um z.B. das in **Fig. 6** gezeigte durch die Bewegung der Intensitätsverteilung auf der Bahn zeitlich modulierte Emissionssignal S zu erhalten. Dieses kann dann, z.B. wie nachfolgend beschrieben, von der Recheneinheit 11 ausgewertet werden, um die Position des Emitters E in der Probe 2 zu schätzen.

Im Folgenden werden verschiedene Beispiele der Auswertung der durch die Verlagerung der Intensitätsverteilung auf der Bahn 20 verursachten zeitlichen Modulation des bei dem erfindungsgemäßen Verfahren erhaltenen Emissionssignals beschrieben, mit denen die Position des Emitters E in der Probe 2 geschätzt werden kann.

Gemäß einer ersten Variante der Auswertung wird eine Fourieranalyse des Emissionssignals S durchgeführt, die sich grundsätzlich sowohl bei einer kreisförmigen Bahn 20 der Intensitätsverteilung (siehe z.B. **Fig. 5**) als auch bei einer nicht-kreisförmigen Bahn 20 der Intensitätsverteilung (siehe z.B. **Fig. 7** bis **Fig. 9**) anwenden lässt.

Für eine einfachere Erläuterung des Grundprinzips der Methode wird im Folgenden von einer 2D-Lokalisation in der Fokusebene in der Probe 2 ausgegangen, bei der die Intensitätsverteilung des Beleuchtungslichts mit einer Kreis-frequenz $\omega$ auf einer kreisförmigen Bahn 20 mit einem Radius $L/2$ um ein Zentrum verlagert wird, das an der vermuteten Position V des Emitters E liegt (siehe **Fig. 5**). Selbstverständlich ist die erfindungsgemäße Positionsschätzung jedoch auch für dreidimensionalen Bahnen der Intensitätsverteilung um die vermutete Position V des Emitters E sowie für zweidimensionale nicht-kreisförmige Bahnen (siehe unten) anwendbar.

Bei einer Darstellung in kartesischen Koordinaten mit einem Nullpunkt an der vermuteten Position V des Emitters E (siehe **Fig. 5**) lässt sich für den Fall der 2D-Lokalisation der zeitliche Verlauf der x-Koordinate des lokalen Minimums der Intensitätsverteilung durch die Gleichung $x = L/2 \cdot \cos \omega t$ und der zeitliche Verlauf der y-Koordinate durch die Gleichung $y = L/2 \cdot \sin \omega t$ darstellen, wobei $L$ den Kreisdurchmesser bzw. die doppelte Amplitude des sinus- bzw. kosinusförmigen Zeitverlaufs der Ortskoordinaten bezeichnet.

Der örtliche Verlauf der Intensitätsverteilung des Beleuchtungslichts wird hier als parabelförmig angenommen, was z.B. für eine donutförmige Intensitätsverteilung in der Nähe des lokalen Minimums in guter Näherung gilt. Für den örtlichen Verlauf der Lichtintensität entlang der x-Koordinate gilt also näherungsweise $I_x(t) = a \cdot x^2$, für den Verlauf entlang der y-Koordinate entsprechend $I_y(t) = a \cdot y^2$. Der Parameter $a$ ist dabei ein sogenannter Formparameter der Intensitätsverteilung, der hier die Steilheit des parabelförmigen Intensitätsverlaufs um das lokale Minimum am Nullpunkt des Koordinatensystems beschreibt. Der Parameter $a$ hängt (im einfachsten Fall linear) von der Gesamtintensität der Intensitätsverteilung und somit von der Leistung des Beleuchtungslichts ab. Für die folgenden Betrachtungen im Rahmen der ersten Variante wird der Einfachheit halber angenommen, dass der Formparameter $a$ vorbekannt bzw. durch eine unabhängige Messung oder Schätzung bestimmbar ist (bei weiteren Varianten des erfindungsgemäßen Verfahrens wird der Formparameter $a$ zusätzlich zu der Position des Emitters aus dem Emissionssignal geschätzt, siehe unten).

Weiterhin wird angenommen, dass ein linearer Zusammenhang zwischen der Intensität des auf den Emitter E wirkenden Beleuchtungslichts und seiner Emissionsrate besteht.

Somit kann durch Einsetzen des zeitlichen Verlaufs der Intensitätsverteilung auf der Bahn in die Gleichung für den örtlichen Verlauf der Intensitätsverteilung der folgende Ausdruck für das zeitlich modulierte Emissionssignal erhalten werden:

$$E(t) \propto a(x - \tfrac{L}{2}\cos(\omega t + \varphi))^2 + a(y - \tfrac{L}{2}\sin(\omega t + \varphi))^2,$$

wobei x und y die x- und y-Koordinaten der tatsächlichen Position des Emitters sind, und wobei $\varphi$ eine Phasenverschiebung zwischen der Bewegung der Intensitätsverteilung auf der Bahn und dem Nullpunkt des Messzeitraums der Detektionsvorrichtung ist. Die Phasenverschiebung kann aufgrund der Möglichkeit der Synchronisation zwischen Scanner und Detektionsvorrichtung (durch Abstimmung während der Messung oder nachträglich durch Datenbearbeitung) vernachlässigt werden. Ebenso kann ein etwaiger Proportionalitätsfaktor zwischen Emissionsrate und Beleuchtungslichtintensität in den Formparameter $a$ einbezogen werden, so dass sich als vereinfachter Ausdruck ergibt:

$$E(t) = a(x - \tfrac{L}{2}\cos(\omega t))^2 + a(y - \tfrac{L}{2}\sin(\omega t))^2.$$

Aus diesem Ausdruck für $E(t)$ lassen sich wie folgt die ersten Koeffizienten $\hat{x}$ und $\hat{y}$ der Fourierreihe bestimmen:

$$\hat{x} = \int_0^{2N\pi/\omega} E(t) \cos \omega t \, \mathrm{d}t = -\frac{a\,N\,\pi\,L}{\omega} \cdot x$$

$$\hat{y} = \int_0^{2N\pi/\omega} E(t) \sin \omega t \, \mathrm{d}t = -\frac{a\,N\,\pi\,L}{\omega} \cdot y$$

Hierbei ist N eine natürliche Zahl.

Durch Umstellen erhält man Schätzer für die x-Koordinate und die y-Koordinate des Emitters E:

$$x = -\frac{\omega}{a\,N\,\pi\,L}\hat{x}$$

$$y = -\frac{\omega}{a\,N\,\pi\,L}\hat{y}$$

Die Fourierkoeffizienten $\hat{x}$ und y können nummerisch aus dem Emissionssignal bestimmt werden, z.B. durch einen FFT (Fast Fourier Transform)- Algorithmus. Die Kreisfrequenz $\omega$ und der Radius $\tfrac{L}{2}$ sind vorbekannt, der Parameter $N$ (Anzahl der Perioden, über die integriert wird) kann frei gewählt werden und der Parameter $a$ wird wie oben erläutert ebenfalls als bekannt angenommen. Insbesondere kann mit einer Recheneinheit, z.B. einem FPGA oder einer elektronischen Schaltung, das Emissionssignal mit $\cos\omega t$ bzw. $\sin\omega t$ (auch als Scanner-offset bezeichnet) multipliziert und mindestens einen Umlauf integriert werden. Daraus kann wie oben beschrieben eine Positionsschätzung für jeweils eine Koordinate erhalten werden, aus der dann z.B. auf Basis des Vergleichs der zuvor vermuteten Position und der neu geschätzten Position, ein Stellsignal für den Scanner abgeleitet werden kann. Die Position des Emitters kann insbesondere auch nach mehreren solchen Schritten aus dem Zentrum der letzten Bahn nach einem geeigneten Abbruchkriterium abgeleitet werden. Alternativ können auch mehrere Stellsignale (ggf. gewichtet) aufsummiert werden, um die finale Positionsschätzung des Emitters zu erhalten. Nach einem Teilschritt, bei der ein Stellsignal erhalten wird, kann insbesondere auch der Radius L/2 der Bahn verkleinert werden und/oder die Gesamtintensität des Beleuchtungslichts erhöht werden, so dass sich der Formparameter $a$ verändert. Solche Parameteranpassungen können z.B. in Abhängigkeit der Gesamtzahl der über einen Umlauf erfassten Lichtemissionen erfolgen, etwa kann die Gesamtintensität erhöht werden, wenn die Gesamtzahl der Lichtemissionen einen Schwellwert unterschreitet.

Bei einer zweiten Variante der Auswertung wird zusätzlich zu der Position des Emitters E ein weiterer Parameter, nämlich der Formparameter $a$, geschätzt. Die Bahn 20 der Intensitätsverteilung ist in dem hier erläuterten Beispiel kreisförmig und der örtliche Verlauf der Intensität des Beleuchtungslichts wird durch eine Parabel approximiert. Selbstverständlich kann das Prinzip der Methode aber auch auf nicht-kreisförmige Bahnen 20 und andere Intensitätsverläufe angewendet werden.

Hierzu wird neben den Fourierkoeffizienten $\hat{x}$ und $\hat{y}$ die Gesamtzahl $\hat{n}$ der Lichtemissionen über einen oder mehrere Umläufe der Intensitätsverteilung um die vermutete Position des Emitters E aus dem Emissionssignal bestimmt. Für $\hat{n}$ ergibt sich unter den oben angegebenen Annahmen analytisch der Ausdruck

$$\hat{n} = \int_0^{2N\,\pi/\omega} E(t)\,\mathrm{d}t = a\pi\frac{L^2 + 4x^2 + 4y^2}{2\,\omega}.$$

Zusammen mit den Ausdrücken $\hat{x} = a^{-\frac{a\,N\,\pi\,L}{\omega}\cdot x}$ und

$$\hat{y} = -\frac{a\,N\,\pi\,L}{\omega}\cdot y$$

erhält man damit insgesamt drei Gleichungen. Durch Lösen dieses Gleichungssystems können dann die drei Unbekannten $x$, $y$ und $a$ bestimmt werden. Somit kann die Position des Emitters auch bei vorab unbekanntem Formparameter der Intensitätsverteilung zuverlässig geschätzt werden.

Bei einer dritten Variante der Auswertung des Emissionssignals können mittels Phasoranalyse eine Winkelkoordinate $\varphi$ und eine Radialkoordinate der tatsächlichen Position des Emitters E relativ zu der vermuteten Position V des Emitters E geschätzt werden. Hierzu werden wie bei der ersten Variante und der zweiten Variante die Fourierkoeffizienten $\hat{x}$ und $\hat{y}$ bestimmt.

Aus diesen kann der Phasenwinkel gemäß der Gleichung $\varphi = tan^{-1}\hat{y}/\hat{x}$ bestimmt werden. Die Bestimmung der Winkelkoordinate $\varphi$ kann bereits ausreichen, um ein Stellsignal für den Scanner bereitzustellen und das Zentrum der Bahn 20 schrittweise näher an die tatsächliche Position des Emitters E zu bewegen, wenn die Schrittweite geeignet gewählt ist.

Zusätzlich kann eine Radialkoordinate $\rho$ der geschätzten Position des Emitters mittels der Gleichung $\rho = \frac{\sqrt{\hat{x}^2 + \hat{y}^2}}{\hat{n}}$ bestimmt werden, wenn wie bei der zweiten Variante die Gesamtzahl $\hat{n}$ der Lichtemissionen während eines Umlaufs oder mehrerer Umläufe der Intensitätsverteilung um die vermutete Position V des Emitters bestimmt wird. Ein Vorteil der dritten Variante der Auswertung ist, dass sich der Formparameter $a$ aus den Gleichungen für $\varphi$ und $\rho$ herauskürzt und die Positionsbestimmung somit unabhängig von dem Formparameter $a$ ist, also auch bei unbekanntem Formparameter $a$ ohne weiteres durchführbar ist.

Bei einer vierten Variante der Auswertung des Emissionssignals werden verschiedene Emissionssignale verwendet, die mit unterschiedlichen Bahnen 20 bzw. unterschiedlichen Parametern der Bahn 20 der Intensitätsverteilung des Beleuchtungslichts um die vermutete Position des Emitters erhalten wurden. Beispielsweise kann der Radius $L$/2 einer kreisförmigen Bahn 20 angepasst werden und es können während verschiedener Messzeitintervalle Emissionssignale aufgenommen werden, die unterschiedlichen Radien $L_1$/2 sowie $L_2$/2 zugeordnet sind. Dies hat den Vorteil, dass neben der Position des Emitters E in der Probe zusätzliche Parameter, wie ein Formparameter $a$ der Intensitätsverteilung und ein Hintergrund repräsentierender Parameter $b$ geschätzt werden können.

Beispielsweise können für einen parabelförmigen Verlauf der Intensitätsverteilung unter Bedingungen mit Hintergrund ($E(t) = a \cdot [(x - I_x(t))^2 + (y - I_y(t))^2] + b$) Fourierkoeffizienten aus einer Überlagerung von zwei Emissionssignalen $E(L_1)$ und $E(L_2)$ wie folgt gebildet werden:

$$\hat{x} = \int_0^{2N\,\pi/\omega} E_{L1}(t)\cos(\omega t)\,\mathrm{d}t + \int_0^{2N\,\pi/\omega} E_{L2}(t)\cos(\omega t)\,\mathrm{d}t = -\frac{a\,N\,\pi\,(L_1 + L_2)}{\omega}\,x$$

$$\hat{y} = \int_0^{2N\,\pi/\omega} E_{L1}(t)\sin(\omega t)\,\mathrm{d}t + \int_0^{2N\,\pi/\omega} E_{L2}(t)\sin(\omega t)\,\mathrm{d}t = -\frac{a\,N\,\pi\,(L_1 + L_2)}{\omega}\,y$$

Zusätzlich können die Summen der Lichtemissionen in dem jeweiligen Messzeitintervall getrennt für die zwei Radien L1 und L2 berechnet werden:

$$\hat{n}_1 = \int_0^{2N\,\pi/\omega} E_{L1}(t)\,\mathrm{d}t = \pi\,\frac{a\left(L_1{}^2 + 4x^2 + 4y^2\right) + 4b}{2\,\omega}$$

$$\hat{n}_2 = \int_0^{2N\,\pi/\omega} E_{L2}(t)\,\mathrm{d}t = \pi\,\frac{a\left(L_2{}^2 + 4x^2 + 4y^2\right) + 4b}{2\,\omega}$$

Auf diese Weise erhält man vier Gleichungen, mittels derer die vier Unbekannten *x, y, a* und *b* bestimmt werden können.

Bei einer fünften Variante der erfindungsgemäßen Auswertung wird ein Emissionssignal verwendet, dessen zeitliche Modulation durch Verlagerung der Intensitätsverteilung auf einer nicht-kreisförmigen Bahn entsteht, wobei die Bahn durch mehrere in einem festen Verhältnis zueinander stehende Kreisfrequenzen gekennzeichnet ist. Beispiele für solche Bahnen sind Hypotrochoiden (siehe **Fig. 7** und **Fig. 8**) mit jeweils mehreren unterschiedlichen Kreisfrequenzen bezüglich der x-Koordinate und der y-Koordinate und Lissajous-Figuren (siehe **Fig. 9**) mit jeweils einer Kreisfrequenz für die x-Koordinate und die y-Koordinate, wobei die Kreisfrequenzen unterschiedlich sind und in einem festen Verhältnis zueinander stehen.

Bei der fünften Variante können aufgrund der unterschiedlichen in der Bahn enthaltenen Kreisfrequenzen ebenfalls weitere Parameter, wie Formparameter der Intensitätsverteilung und ein Hintergrund repräsentierender Parameter geschätzt werden, allerdings mittels einer geschlossenen Bahn, d.h. ohne sprunghafte Änderung der Steuerparameter für den Scanner.

Bei der Auswertung wird ausgenutzt, dass die Intensitätsverteilung die vermutete Position V des Emitters E in der Probe 2 innerhalb einer geschlossenen Bahn 20 mehrfach umläuft. Die gesamte Bahn 20 ist also durch mehrere periodische Bewegungen bezüglich der einzelnen Ortskoordinaten gekennzeichnet. Über diese Abschnitte wird nun das Emissionssignal getrennt integriert, um linear unabhängige Gleichungen zu erhalten.

Die Auswertung gemäß der fünften Variante wird im Folgenden beispielhaft für eine spezielle rosettenförmige Bahn mit drei Blättern illustriert, wobei die zeitliche Änderung der Ortkoordinaten x und y durch die folgenden Gleichungen beschrieben werden kann:

$$x = L/2 \cdot \cos(\omega t) + L/2 \cdot \cos(1/2 \cdot \omega t)$$

$$y = L/2 \cdot \sin(\omega t) - L/2 \cdot \sin(1/2 \cdot \omega t)$$

*L*/2 bezeichnet hier in Analogie zum Kreisradius die Amplitude der Bewegung in den beiden Raumrichtungen x und y. Es liegen in diesem Fall ein Frequenzverhältnis von 2:1 und ein Amplitudenverhältnis von 1:1 vor.

Unter Annahme eines parabelförmigen Verlaufs der Intensitätsverteilung in der Nähe des lokalen Minimums und unter Berücksichtigung von Hintergrund (Parameter *b*) folgt daraus:

$$E(t) = a[(x - \frac{L}{2}(\cos\omega t + \cos 1/2 \cdot \omega t)^2 + (y - \frac{L}{2}(\sin\omega t - \sin(1/2 \cdot \omega t))^2] + b$$

Für jede Raumrichtung können nun neben den durch Integration von 0 bis $2\pi$ bestimmten Fourierkoeffizienten durch Integration über Teilintervalle mehrere unterschiedliche Ausdrücke für die entsprechenden Gesamtzahlen von Lichtemissionen $\hat{n}_1$, $\hat{n}_2$ erhalten werden.

$$\hat{x} = \int_0^{2\pi/\omega} E(t)\cos(\omega t)\,\mathrm{d}t = -\frac{6\pi Lax + 8Lay}{6\omega}$$

$$\hat{y} = \int_0^{2\pi/\omega} E(t)\sin(\omega t)\,\mathrm{d}t = -\frac{15\pi Lay + 12L^2a + 40Lax}{15\omega}$$

$$\hat{n}_1 = \int_0^{\pi/\omega} E(t)\mathrm{d}t = \frac{3\pi L^2 a - 2L^2 a + 6\pi a y^2 + 6\pi a x^2 - 12Lax + 6\pi b}{6\omega}$$

$$\hat{n}_2 = \int_{\pi/\omega}^{2\pi/\omega} E(t)\mathrm{d}t = \frac{3\pi L^2 a + 2L^2 a + 6\pi a y^2 + 6\pi a x^2 + 12Lax + 24Lay + 6\pi b}{6\omega}$$

Das resultierende Gleichungssystem kann mit den gemessenen Werten von $\hat{x}$, $\hat{y}$ (Fouriertransformation des Emissionssignals) sowie $\hat{n}_1$ und $\hat{n}_2$ Summen von Lichtemissionen in den entsprechenden Teilintervallen des Messzeitintervalls für $x, y, a$ und $b$ gelöst werden.

Bei der fünften Variante (und analogen Ausführungsformen) ist bei der Übertragung auf andere Bahnen darauf zu achten, dass die Integrationsgrenzen so gewählt sind, dass nicht linear abhängige Gleichungen für $\hat{n}_1$ und $\hat{n}_2$ erhalten werden.

**Bezugszeichenliste**

| 1 | Lichtmikroskop |
|---|---|
| 2 | Probe |
| 3 | Lichtquelle |
| 4 | Beleuchtungsoptik |
| 5 | Lichtmodulator |
| 6 | Scanner |
| 7 | Steuereinheit |
| 8 | Objektiv/Objektivlinse |
| 9 | Strahlteiler |
| 10 | Detektionsvorrichtung |
| 11 | Recheneinheit |
| 12 | Tubuslinse |
| 13 | Fokussierlinse |
| 14 | Scanlinse |
| 20 | Bahn |
| 22 | Nahbereich |
| 61 | Erste optische Komponente |
| 62 | Zweite optische Komponente |
| 63 | Dritte optische Komponente |
| 64 | Vierte optische Komponente |
| B | Beleuchtungslichtstrahl |
| D1,D2,D3,D4 | Drehachsen |
| E | Emitter |
| F | Fokusebene |
| F' | Bildebene |
| L | Lichtemission |
| O | Optische Achse |
| P | Pupille |
| P' | Pupillenebene |
| S | Emissionssignal |
| T | Messzeitintervall |
| V | Vermutete Position |

**Patentansprüche**

1. Verfahren zur Lokalisierung oder zum Verfolgen eines Emitters (E) in einer Probe (2), wobei die Probe (2) mit einer Intensitätsverteilung von Beleuchtungslicht mit einem lokalen Intensitätsminimum beleuchtet wird, wobei sich das Beleuchtungslicht auf Lichtemissionen (L) des Emitters (E) auswirkt, und wobei die Intensitätsverteilung auf einer Bahn (20) um eine vermutete Position (V) des Emitters (E) verlagert wird,
**dadurch gekennzeichnet, dass**
Lichtemissionen (L) des Emitters (E) in einem Messzeitintervall (T) zeitlich aufgelöst erfasst werden, um ein Emissionssignal (S) zu erhalten, wobei eine Position des Emitters (E) in der Probe (2) auf Basis einer durch die Verlagerung der Intensitätsverteilung auf der Bahn (20) hervorgerufenen zeitlichen Modulation des Emissionssignals (S) geschätzt wird.

2. Verfahren nach Anspruch 1, **dadurch gekennzeichnet, dass** die Intensitätsverteilung mittels eines mechanischen Scanners (6), insbesondere eines Galvanometerscanners, relativ zu der Probe verlagert wird, insbesondere wobei die Intensitätsverteilung kontinuierlich verlagert wird.

3. Verfahren nach Anspruch 1 oder 2, **dadurch gekennzeichnet, dass** mittels Fourieranalyse des Emissionssignals (S) mindestens eine Ortskoordinate des Emitters (E) geschätzt wird.

4. Verfahren nach Anspruch 3, **dadurch gekennzeichnet, dass** aus dem Emissionssignal (S) auf Basis der Formeln

$$\hat{x} = \int_0^{N \cdot 2\pi/\omega} E(t) \cdot \cos(k \cdot \omega\, t)\, dt \quad \text{und} \quad \hat{y} = \int_0^{N \cdot 2\pi/\omega} E(t) \cdot \sin(k \cdot \omega\, t)\, dt$$

Schätzwerte für eine erste Ortskoordinate (x) des Emitters (E) und eine zweite Ortskoordinate (y) des Emitters (E) ermittelt werden, wobei $E(t)$ das Emissionssignal (S) bezeichnet, $t$ die Zeit bezeichnet, $\omega$ eine Kreisfrequenz der Bewegung der Intensitätsverteilung auf der Bahn (20) bezeichnet, und $N$ und $k$ natürliche Zahlen sind, wobei zur Ermittlung der ersten Ortskoordinate (x) und der zweiten Ortskoordinate (y) ein örtlicher Intensitätsverlauf der Intensitätsverteilung zu Grunde gelegt wird, insbesondere wobei das Emissionssignal (S) durch die Formel $E(t) = a \cdot [(x - I_x(t))^c + (y - I_y(t))^c]$ oder die Formel $E(t) = a \cdot [(x - I_x(t))^c + (y - I_y(t))^c] + b$ repräsentiert wird, wobei $x$ die erste Ortskoordinate (x) einer tatsächlichen Position des Emitters (E) ist, wobei $y$ die zweite Ortskoordinate (y) der tatsächlichen Position des Emitters (E) ist, wobei $I_x(t)$ eine durch die Bewegung der Intensitätsverteilung auf der Bahn (20) verursachte zeitliche Änderung der ersten Ortskoordinate (x) beschreibt, wobei $I_y(t)$ eine durch die Bewegung der Intensitätsverteilung auf der Bahn (20) verursachte zeitliche Änderung der zweiten Ortskoordinate (y) beschreibt, wobei $a$ einen ersten Formparameter der Intensitätsverteilung beschreibt, und wobei c einen zweiten Formparameter der Intensitätsverteilung beschreibt, und wobei $b$ einen Hintergrund repräsentierenden Parameter beschreibt.

5. Verfahren nach Anspruch 4, **dadurch gekennzeichnet, dass** die zeitliche Änderung der ersten Ortskoordinate (x) und die zeitliche Änderung der zweiten Ortskoordinate (y) jeweils durch eine Sinusfunktion oder Kosinusfunktion repräsentiert werden oder dass die zeitliche Änderung der ersten Ortskoordinate (x) und die zeitliche Änderung der zweiten Ortskoordinate (y) jeweils durch eine gewichtete Summe von Sinusfunktionen und/oder Kosinusfunktionen repräsentiert werden, insbesondere wobei die Sinusfunktionen und/oder die Kosinusfunktionen unterschiedliche Kreisfrequenzen aufweisen, die in einem festen Verhältnis zueinander stehen.

6. Verfahren nach einem der vorhergehenden Ansprüche, **dadurch gekennzeichnet, dass** die Bahn (20) durch eine Überlagerung unterschiedlicher Kreisfrequenzen beschreibbar ist, wobei mittels einer Auswertung des Emissionssignals (S) zusätzliche Information gewonnen wird, wobei die zusätzliche Information genutzt wird, um neben der Position des Emitters (E) Schätzwerte für weitere Parameter zu ermitteln, insbesondere wobei die Schätzwerte für die weiteren Parameter einen Schätzwert für einen Formparameter der Intensitätsverteilung und/oder einen Schätzwert für Hintergrund umfassen, weiter insbesondere wobei Integrale über das Emissionssignal über unterschiedliche Integrationsgrenzen berechnet werden, um die Schätzwerte für die weiteren Parameter zu ermitteln.

7. Verfahren nach einem der vorhergehenden Ansprüche, **dadurch gekennzeichnet, dass** mittels Phasoranalyse des Emissionssignals (S) eine Winkelkoordinate des Emitters (E) geschätzt wird, und wobei bei der Schätzung der Winkelkoordinate ein örtlicher Intensitätsverlauf der Intensitätsverteilung zu Grunde gelegt wird, insbesondere wobei die Winkelkoordinate auf Basis der Formel $\varphi = \tan^{-1} \hat{y}/\hat{x}$ bestimmt wird, wobei $\hat{x} = \int_0^{N \cdot 2\pi/\omega} E(t) \cdot \cos(k \cdot \omega\, t)\, dt$ und $\hat{y} = \int_0^{N \cdot 2\pi/\omega} E(t) \cdot \sin(k \cdot \omega\, t)\, dt$, wobei $E(t)$ das Emissionssignal (S) bezeichnet, $t$ die Zeit bezeichnet, $\omega$ eine Kreisfrequenz der Bewegung der Intensitätsverteilung auf der Bahn (20) bezeichnet, und $N$ und $k$ natürliche Zahlen sind.

8. Verfahren nach Anspruch 7, **dadurch gekennzeichnet, dass** mittels der Phasoranalyse weiterhin eine Radialkoordinate des Emitters (E) geschätzt wird, insbesondere wobei die Radialkoordinate auf Basis der Formel $\rho = \frac{\sqrt{\hat{x}^2+\hat{y}^2}}{\hat{n}}$ bestimmt wird, wobei $\hat{x} = \int_0^{N\cdot 2\pi/\omega} E(t) \cdot \cos\,(k\,\cdot\,\omega t)\,dt,$ $\hat{y} = \int_0^{N\cdot 2\pi/\omega} E(t) \cdot \sin\,(k\cdot\omega\,t)\,dt$ und $\hat{n} = \int_0^{N\cdot 2\pi/\omega} E(t)\,dt$.

9. Verfahren nach einem der Ansprüche 1 bis 8, **dadurch gekennzeichnet, dass** ein Radius einer kreisförmigen Bahn (20) der Intensitätsverteilung um die vermutete Position des Emitters (E) angepasst wird, wobei aus jeweiligen Lichtemissionen (L), die unterschiedlichen Radien der Bahn (20) zugeordnet sind, mehrere Emissionssignale (S) ermittelt werden, wobei die Position des Emitters (E) auf Basis von zeitlichen Modulationen der mehreren Emissionssignale (S) geschätzt wird.

10. Verfahren nach einem der vorhergehenden Ansprüche, **dadurch gekennzeichnet, dass** die Intensitätsverteilung auf einer nichtkreisförmigen Bahn (20) um die vermutete Position des Emitters (E) verlagert wird, wobei die Bahn Teilabschnitte aufweist, die näherungsweise auf Kreisen mit unterschiedlichen Radien um die vermutete Position des Emitters (E) liegen, wobei aus den jeweiligen Teilabschnitten zugeordneten Lichtemissionen (L) mehrere Emissionssignale (S) ermittelt werden, und wobei die Position des Emitters (E) auf Basis von zeitlichen Modulationen der mehreren Emissionssignale (S) geschätzt wird.

11. Verfahren nach einem der vorhergehenden Ansprüche, **dadurch gekennzeichnet, dass** eine Leistung des Beleuchtungslichts variiert wird, wobei aus jeweils bei gleicher Leistung erhaltenen Lichtemissionen (L) mehrere Emissionssignale (S) ermittelt werden, und wobei die Position des Emitters (E) auf Basis von zeitlichen Modulationen der mehreren Emissionssignale (S) geschätzt wird.

12. Verfahren nach einem der Ansprüche 9 bis 11, **dadurch gekennzeichnet, dass** auf Basis der mehreren Emissionssignale zusätzlich ein Schätzwert für einen Formparameter der Intensitätsverteilung und/oder ein Schätzwert für Hintergrund ermittelt wird.

13. Verfahren nach einem der vorhergehenden Ansprüche, **dadurch gekennzeichnet, dass** nach dem Schätzen der Position eine erneute Positionsbestimmung des Emitters (E) durchgeführt wird, wobei die Intensitätsverteilung des Beleuchtungslichts bei der erneuten Positionsbestimmung auf einer Bahn (20) um die zuvor geschätzte Position des Emitters (E) verlagert wird, wobei in einem weiteren Messzeitintervall (T) weitere Lichtemissionen (L) des Emitters (E) zeitlich aufgelöst erfasst werden, und wobei aus den in dem weiteren Messzeitintervall (T) erfassten Lichtemissionen (L) ein weiteres Emissionssignal (S) erhalten wird, und wobei die Position des Emitters (E) auf Basis einer durch die Verlagerung der Intensitätsverteilung auf der Bahn (20) um die zuvor geschätzte Position hervorgerufenen zeitlichen Modulation des weiteren Emissionssignals (S) erneut geschätzt wird, insbesondere mit erhöhter Genauigkeit, insbesondere wobei für die erneute Positionsbestimmung ein Parameter der Intensitätsverteilung und/oder ein Parameter der Bahn (20) angepasst wird, insbesondere wobei ein von der Bahn (20) durchlaufender Bereich um die geschätzte Position des Emitters (E) verkleinert wird und/oder eine Leistung des Beleuchtungslichts erhöht wird.

14. Lichtmikroskop (1) zur Lokalisierung oder zum Verfolgen eines Emitters (E) in einer Probe (2), insbesondere zur Durchführung eines Verfahrens nach einem der Ansprüche 1 bis 13, aufweisend

a. eine Beleuchtungsoptik (4), die dazu ausgebildet ist, die Probe (2) mit einer Intensitätsverteilung von Beleuchtungslicht (B) mit einem lokalen Intensitätsminimum zu beleuchten, wobei sich das Beleuchtungslicht (B) auf Lichtemissionen (L) des Emitters (E) auswirkt,
b. einen Scanner (6), der dazu ausgebildet ist, die Intensitätsverteilung auf einer Bahn (20) um eine vermutete Position (V) des Emitters (E) zu verlagern,
c. eine Detektionsvorrichtung (10), die dazu ausgebildet ist, Lichtemissionen (L) des Emitters (E) in einem Messzeitintervall (T) zeitlich aufgelöst zu erfassen, um ein Emissionssignal (S) zu erhalten, und
d. eine Recheneinheit (11), die dazu ausgebildet ist, eine Position des Emitters (E) in der Probe (2) auf Basis einer durch die Verlagerung der Intensitätsverteilung auf der Bahn (20) hervorgerufenen zeitlichen Modulation des Emissionssignals (S) zu schätzen.

15. Computerprogramm aufweisend Befehle, die das Lichtmikroskop (1) nach Anspruch 14 dazu veranlassen, das Verfahren nach einem der Ansprüche 1 bis 13 durchzuführen.

Fig. 1

1

3

B

4

5

6

9

O

10    11    7

8

2

Fig. 2

Fig. 3

Fig. 4

Fig. 5

Fig. 6

Fig. 7

Fig. 8

Fig. 9

Europäisches Patentamt

European Patent Office

Office européen des brevets

**Nummer der Anmeldung**

EP 24 18 2172

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2011 055367 A1 (MAX PLANCK GESELLSCHAFT [DE]) 16. Mai 2013 (2013-05-16) | 1-3,6, 10,11, 13-15 | INV. G01N21/64 G02B21/00 |
| Y | * Abbildungen 1,2 * | 4,5,12 | |
| A | * Absätze [0001], [0012] - [0016], [0022], [0027], [0037] * ----- | 7-9 | ADD. G02B21/36 |
| X | WO 2023/006176 A1 (MAX PLANCK GESELLSCHAFT [DE]) 2. Februar 2023 (2023-02-02) | 1-6, 9-11, 13-15 | |
| Y | * Abbildung 1 * * Seite 1, Zeile 2 - Zeile 6 * * Seite 7, Zeile 21 - Zeile 32 * * Seite 8, Zeile 12 - Zeile 30 * * Seite 18, Zeile 21 - Seite 19, Zeile 15 * ----- | 4,5,7,8, 12 | |
| X | BALZAROTTI FRANCISCO ET AL: "Nanometer resolution imaging and tracking of fluorescent molecules with minimal photon fluxes including supplementary information", SCIENCE, Bd. 355, Nr. 6325, 10. Februar 2017 (2017-02-10), Seiten 606-612, XP093227442, US ISSN: 0036-8075, DOI: 10.1126/science.aak9913 | 1-3,6, 10,13-15 | RECHERCHIERTE SACHGEBIETE (IPC) G01N G02B |
| Y | * Zusammenfassung; Abbildungen 1,2 * | 4,5,12 | |
| A | * Seite 1, Spalte 3, Absatz 3 * ----- | 7-9,11 | |
| Y | DE 10 2020 131047 A1 (ABBERIOR INSTRUMENTS GMBH [DE]) 9. Juni 2022 (2022-06-09) | 7,8 | |
| A | * Absätze [0001], [0050], [0065], [0066] * ----- | 1-6,9-15 | |

-/--

Der vorliegende Recherchenbericht wurde für alle Patentansprüche erstellt

| Recherchenort | Abschlußdatum der Recherche | Prüfer |
|---|---|---|
| München | 25. November 2024 | Gangl, Martin |

**EUROPÄISCHER RECHERCHENBERICHT**

Europäisches Patentamt
European Patent Office
Office européen des brevets

**Nummer der Anmeldung**

EP 24 18 2172

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | DE 10 2020 134495 A1 (ABBERIOR INSTRUMENTS GMBH [DE]) 7. Juli 2022 (2022-07-07) | 12 | |
| A | * Absätze [0001], [0015] - [0018], [0047], [0048] * | 1-11, 13-15 | |
| | - - - - - | | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 25. November 2024 | Gangl, Martin |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

.........................................................................................
& : Mitglied der gleichen Patentfamilie, übereinstimmendes
  Dokument

EPO FORM 1503 03.82 (P04C03)

**EP 4 488 664 A1**

## ANHANG ZUM EUROPÄISCHEN RECHERCHENBERICHT
## ÜBER DIE EUROPÄISCHE PATENTANMELDUNG NR.

EP 24 18 2172

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-11-2024

| Im Recherchenbericht angeführtes Patentdokument | Datum der Veröffentlichung | Mitglied(er) der Patentfamilie | | Datum der Veröffentlichung |
|---|---|---|---|---|
| DE 102011055367 A1 | 16-05-2013 | CN | 103930769 A | 16-07-2014 |
| | | DE | 102011055367 A1 | 16-05-2013 |
| | | EP | 2780694 A1 | 24-09-2014 |
| | | JP | 6078889 B2 | 15-02-2017 |
| | | JP | 2014535059 A | 25-12-2014 |
| | | RU | 2014124189 A | 27-12-2015 |
| | | WO | 2013072273 A1 | 23-05-2013 |
| WO 2023006176 A1 | 02-02-2023 | CN | 117795319 A | 29-03-2024 |
| | | EP | 4377678 A1 | 05-06-2024 |
| | | JP | 2024526821 A | 19-07-2024 |
| | | US | 2024183783 A1 | 06-06-2024 |
| | | WO | 2023006176 A1 | 02-02-2023 |
| DE 102020131047 A1 | 09-06-2022 | CN | 116569090 A | 08-08-2023 |
| | | DE | 102020131047 A1 | 09-06-2022 |
| | | US | 2023296520 A1 | 21-09-2023 |
| | | WO | 2022112155 A1 | 02-06-2022 |
| DE 102020134495 A1 | 07-07-2022 | CN | 116670492 A | 29-08-2023 |
| | | DE | 102020134495 A1 | 07-07-2022 |
| | | EP | 4264353 A1 | 25-10-2023 |
| | | US | 2024035950 A1 | 01-02-2024 |
| | | WO | 2022136361 A1 | 30-06-2022 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2004079405 A2
- JP 2000098238 A
- JP 2005241321 A
- DE 102016117096 B4
- DE 102011055367 A1
- DE 102013114860 B3
- WO 2022029283 A1
- EP 3372990 B1

**In der Beschreibung aufgeführte Nicht-Patentliteratur**

- **JÖRG ENDERLEIN**. Tracking of fluorescent molecules diffusing within membranes. *Appl. Phys. B*, 2000, vol. 71, 773-777
- **JÖRG ENDERLEIN**. Positional and Temporal Accuracy of Single Molecule Tracking. *Single Mol.*, vol. 1, 225-230, https://doi.org/10.1002/1438-5171
- **LEVI V. et al.** Scanning FCS, a novel method for three-dimensional particle tracking. *Biochem Soc Trans.*, October 2003, vol. 31, 997-1000
- **LEVI V. et al.** 3-D Particle Tracking in a Two-Photon Microscope: Application to the Study of Molecular Dynamics in Cells. *Biophys. J*, 2005, vol. 88, 2919-2928
- **KIS-PETIKOVA K. et al.** Distance Measurement by Circular Scanning of the Excitation Beam in the Two-Photon Microscope. *Microscopy Research and Technique*, 2004, vol. 63, 34-49
- Trapping and Manipulating Single Molecules in Solution. **ADAM E. COHEN**. Dissertation. Stanford University, August 2006
- **KATAYAMA Y**. Real-time nanomicroscopy via three-dimensional single-particle tracking. *Chemphyschem.*, 05 October 2009, vol. 10 (14), 2458-64
- **WEHNEKAMP, F. et al.** Nanoresolution real-time 3D orbital tracking for studying mitochondrial trafficking in vertebrate axons in vivo. *eLife*, 2019, vol. 8, e46059, https://doi.org/10.7554/eLife.46059
- **BERGLUND AJ** ; **MABUCHI H**. Tracking-FCS: Fluorescence correlation spectroscopy of individual particles. *Optics Express*, 2005, vol. 13 (20), 8069-8082
- **BALZAROTTI F. et al.** Nanometer resolution imaging and tracking of fluorescent molecules with minimal photon fluxes. *Science*, 10 February 2017, vol. 355 (6325), 606-612
- **LUCIANO A. MASULLO et al.** A common framework for single-molecule localization using sequential structured illumination. *Biophysical Reports*, 2022, vol. 2 (1), 100036, https://doi.org/10.1016/j.bpr.2021.100036